# EUROPEAN PATENT APPLICATION

(11) **EP 4 571 662 A1**
(43) Date of publication of application: **18.06.2025**
(21) Application number: 22955124.7
(22) Date of filing: 08.12.2022
(51) Int. Cl.: G06T 19/00, G06T 15/00, G02B 27/01, G02B 30/10

(54) **SIGNAL PROCESSING APPARATUS AND AUGMENTED REALITY APPARATUS FOR VEHICLE HAVING SAME**

(30) Priority: 09.08.2022 KR 20220099479
(71) Applicant: LG Electronics Inc., Yeongdeungpo-gu Seoul 07336 (KR)
(72) Inventor: CHOI, Sunghwan, Seoul 06772 (KR); JUNG, Dukyung, Seoul 06772 (KR)
(74) Representative: Vossius & Partner Patentanwälte Rechtsanwälte mbB
(86) International application number: PCT/KR2022/019984
(87) International publication number: WO 2024/034752

(57) **Abstract**

A signal processing device and an augmented reality apparatus for a vehicle including the same are disclosed. The signal processing device includes: a memory to store map data; and a processor to generate a graphical overlay based on camera data from a camera, the map data, or sensor data from a sensor device, wherein the processor is configured to execute a plurality of virtual machines on an executed hypervisor, detect an object from the camera data through a first engine executed in one of the plurality of virtual machines, transmit the detected object to a second engine through a shared memory based on the hypervisor, generate a graphical overlay based on the detected object through the second engine executed in some of the plurality of virtual machines and output the generated graphical overlay. Accordingly, an augmented reality-based graphical overlay may be rapidly provided.

## Description

### BACKGROUND

### 1. Field

The present disclosure relates to a signal processing device and an augmented reality apparatus for a vehicle including the same, and more particularly to a signal processing device capable of rapidly providing an augmented reality-based graphical overlay, and an augmented reality apparatus for a vehicle including the signal processing device.

### 2. Description of the Related Art

A vehicle is an apparatus that a driver moves in a desired direction. A typical example of the vehicle is an automobile.

Meanwhile, a display apparatus for vehicles is mounted in the vehicle to provide user convenience.

For example, a display is disposed in a cluster in order to display various types of information. Meanwhile, in addition to the cluster, various displays, such as an audio video navigation (AVN) display, a head-up display for displaying a projected image on the windshield, etc., are mounted in the vehicle to display vehicle driving information and the like.

Particularly, the head-up display, which displays the projected image on the windshield, may be referred to as an in-vehicle augmented reality apparatus.

Meanwhile, when a delay occurs while the in-vehicle augmented reality apparatus provides guide information related to vehicle traveling, the delay increases the possibility of safety problems.

### SUMMARY

It is an objective of the present disclosure to provide a signal processing device capable of rapidly providing an augmented reality-based graphical overlay, and an augmented reality apparatus for a vehicle including the signal processing device.

Meanwhile, it is another objective of the present disclosure to provide a signal processing device capable of rapidly and stably providing an augmented reality-based graphical overlay, and an augmented reality apparatus for a vehicle including the signal processing device.

In accordance with an aspect of the present disclosure, the above and other objectives can be accomplished by providing a signal processing device including: a memory configured to store map data; and a processor configured to generate a graphical overlay based on camera data from a camera, the map data, or sensor data from a sensor device, wherein the processor is configured to execute a plurality of virtual machines on an executed hypervisor, to detect an object from the camera data through a first engine executed in one of the plurality of virtual machines, to transmit the detected object to a second engine through a shared memory based on the hypervisor, and to generate a graphical overlay based on the detected object through the second engine executed in some of the plurality of virtual machines and output the generated graphical overlay.

Meanwhile, the processor may be configured to superimpose the graphical overlay on the detected object.

Meanwhile, a server virtual machine among the plurality of virtual machines may be configured to detect the object from the camera data through the first engine, and a guest virtual machine among the plurality of virtual machines may be configured to generate the graphical overlay based on the detected object through the second engine and to output the generated graphical overlay.

Meanwhile, a first guest virtual machine among the plurality of virtual machines may be configured to operate for a first display, and a second guest virtual machine among the plurality of virtual machines may be configured to generate the graphical overlay based on the detected object through the second engine and to output the generated graphical overlay to an image projection device.

Meanwhile, a first guest virtual machine among the plurality of virtual machines may be configured to operate for a first display, and a second guest virtual machine among the plurality of virtual machines may be configured to operate for a second display and to generate the graphical overlay based on the detected object through the second engine and output the generated graphical overlay to the second display.

Meanwhile, the guest virtual machine among the plurality of virtual machines may be configured to generate guide information related to vehicle traveling through a third engine based on the sensor data from the sensor device and the map data from the memory, wherein the second engine may be configured to generate the graphical overlay based on the generated guide information related to vehicle traveling and the detected object and output the generated graphical overlay.

Meanwhile, the server virtual machine among the plurality of virtual machines may be configured to generate guide information related to vehicle traveling through a third engine based on the sensor data from the sensor device and the map data from the memory, wherein the second engine may be configured to generate the graphical overlay based on the generated guide information related to vehicle traveling and the detected object and output the generated graphical overlay.

Meanwhile, an input and output resource manager executed based on the hypervisor may be configured to receive the camera data from the camera or the sensor data from the sensor device and to provide the camera data or the sensor data to the first engine or the second engine.

Meanwhile, the graphical overlay may include a first layer including vehicle speed information and vehicle heading direction information, and a second layer including a preceding vehicle object and an indicator of a distance to a preceding vehicle.

Meanwhile, the processor may include a data interface configured to receive the camera data from the camera or the sensor data from the sensor device, wherein the second engine may be configured to perform sensor fusion based on the camera data, the map data, or the sensor data, to perform geometric modeling based on a result of performing the sensor fusion, and to perform visualization based on a result of the modeling.

Meanwhile, the processor may include: a data interface configured to receive the camera data from the camera or the sensor data from the sensor device; a sensor fusion processor configured to perform sensor fusion based on the camera data, the map data, or the sensor data; a geometric modeling processor configured to perform geometric modeling based on a result of performing the sensor fusion; and a visualization processor configured to perform visualization based on a result of the modeling.

In accordance with another aspect of the present disclosure, the above and other objectives can be accomplished by providing a signal processing device including: a memory configured to store map data; and a processor configured to generate a graphical overlay based on camera data from a camera, the map data, or sensor data from a sensor device, wherein the processor is configured to execute a plurality of virtual machines on an executed hypervisor, to detect an object from the camera data through a first engine executed in some of the plurality of virtual machines, to generate a graphical overlay based on the detected object through the second engine, and to transmit the generated graphical overlay to another virtual machine among the plurality of virtual machines through a shared memory based on the hypervisor.

Meanwhile, the processor may be configured to superimpose the graphical overlay on the detected object.

Meanwhile, a server virtual machine among the plurality of virtual machines may be configured to detect the object from the camera data through the first engine, and to transmit the graphical overlay, generated through the second engine based on the detected object, to an augmented reality application executed in a guest virtual machine through a shared memory.

Meanwhile, a first guest virtual machine among the plurality of virtual machines may be configured to operate for a first display, and a second guest virtual machine among the plurality of virtual machines may be configured to operate for a second display or an image projection device.

Meanwhile, a server virtual machine among the plurality of virtual machines may be configured to transmit the generated graphical overlay to a second guest machine through the shared memory.

Meanwhile, a server virtual machine among the plurality of virtual machines may be configured to transmit the generated graphical overlay to the first guest machine through the shared memory.

Meanwhile, the server virtual machine among the plurality of virtual machines may be configured to generate guide information related to vehicle traveling through a third engine based on the sensor data from the sensor device and the map data from the memory, wherein the second engine may be configured to generate the graphical overlay based on the generated guide information related to vehicle traveling and the detected object and output the generated graphical overlay.

Meanwhile, an input and output resource manager executed based on the hypervisor may be configured to receive the camera data from the camera or the sensor data from the sensor device and to provide the camera data or the sensor data to the first engine or the second engine.

In accordance with yet another aspect of the present disclosure, the above and other objectives can be accomplished by providing an augmented reality apparatus for a vehicle, the apparatus including: at least one camera; and a signal processing device including a processor configured to generate a graphical overlay based on camera data from the camera.

### EFFECTS OF THE DISCLOSURE

A signal processing device according to an embodiment of the present disclosure includes: a memory configured to store map data; and a processor configured to generate a graphical overlay based on camera data from a camera, the map data, or sensor data from a sensor device, wherein the processor is configured to execute a plurality of virtual machines on an executed hypervisor, to detect an object from the camera data through a first engine executed in one of the plurality of virtual machines, to transmit the detected object to a second engine through a shared memory based on the hypervisor, and to generate a graphical overlay based on the detected object through the second engine executed in some of the plurality of virtual machines and output the generated graphical overlay. Accordingly, an augmented reality-based graphical overlay may be rapidly provided. In addition, an augmented reality-based graphical overlay may be rapidly and stably provided.

Meanwhile, the processor may be configured to superimpose the graphical overlay on the detected object. Accordingly, an augmented reality-based graphical overlay may be rapidly provided.

Meanwhile, a server virtual machine among the plurality of virtual machines may be configured to detect the object from the camera data through the first engine, and a guest virtual machine among the plurality of virtual machines may be configured to generate the graphical overlay based on the detected object through the second engine and to output the generated graphical overlay. Accordingly, an augmented reality-based graphical overlay may be rapidly provided.

Meanwhile, a first guest virtual machine among the plurality of virtual machines may be configured to operate for a first display, and a second guest virtual machine among the plurality of virtual machines may be configured to generate the graphical overlay based on the detected object through the second engine and to output the generated graphical overlay to an image projection device. Accordingly, an augmented reality-based graphical overlay may be rapidly provided.

Meanwhile, a first guest virtual machine among the plurality of virtual machines may be configured to operate for a first display, and a second guest virtual machine among the plurality of virtual machines may be configured to operate for a second display and to generate the graphical overlay based on the detected object through the second engine and output the generated graphical overlay to the second display. Accordingly, an augmented reality-based graphical overlay may be rapidly provided.

Meanwhile, the guest virtual machine among the plurality of virtual machines may be configured to generate guide information related to vehicle traveling through a third engine based on the sensor data from the sensor device and the map data from the memory, wherein the second engine may be configured to generate the graphical overlay based on the generated guide information related to vehicle traveling and the detected object and output the generated graphical overlay. Accordingly, an augmented reality-based graphical overlay including the guide information related to vehicle traveling may be rapidly provided.

Meanwhile, the server virtual machine among the plurality of virtual machines may be configured to generate guide information related to vehicle traveling through a third engine based on the sensor data from the sensor device and the map data from the memory, wherein the second engine may be configured to generate the graphical overlay based on the generated guide information related to vehicle traveling and the detected object and output the generated graphical overlay. Accordingly, an augmented reality-based graphical overlay including the guide information related to vehicle traveling may be rapidly provided.

Meanwhile, an input and output resource manager executed based on the hypervisor may be configured to receive the camera data from the camera or the sensor data from the sensor device and to provide the camera data or the sensor data to the first engine or the second engine. Accordingly, an augmented reality-based graphical overlay may be rapidly provided.

Meanwhile, the graphical overlay may include a first layer including vehicle speed information and vehicle heading direction information, and a second layer including a preceding vehicle object and an indicator of a distance to a preceding vehicle. Accordingly, an augmented reality-based graphical overlay including the guide information related to vehicle traveling may be rapidly provided.

Meanwhile, the processor may include a data interface configured to receive the camera data from the camera or the sensor data from the sensor device, wherein the second engine may be configured to perform sensor fusion based on the camera data, the map data, or the sensor data, to perform geometric modeling based on a result of performing the sensor fusion, and to perform visualization based on a result of the modeling. Accordingly, an augmented reality-based graphical overlay may be rapidly provided.

Meanwhile, the processor may include: a data interface configured to receive the camera data from the camera or the sensor data from the sensor device; a sensor fusion processor configured to perform sensor fusion based on the camera data, the map data, or the sensor data; a geometric modeling processor configured to perform geometric modeling based on a result of performing the sensor fusion; and a visualization processor configured to perform visualization based on a result of the modeling. Accordingly, an augmented reality-based graphical overlay may be rapidly provided.

A signal processing device according to another embodiment of the present disclosure includes: a memory configured to store map data; and a processor configured to generate a graphical overlay based on camera data from a camera, the map data, or sensor data from a sensor device, wherein the processor is configured to execute a plurality of virtual machines on an executed hypervisor, to detect an object from the camera data through a first engine executed in some of the plurality of virtual machines, to generate a graphical overlay based on the detected object through the second engine, and to transmit the generated graphical overlay to another virtual machine among the plurality of virtual machines through a shared memory based on the hypervisor. Accordingly, an augmented reality-based graphical overlay may be rapidly provided. In addition, an augmented reality-based graphical overlay may be rapidly and stably provided.

Meanwhile, the processor may be configured to superimpose the graphical overlay on the detected object. Accordingly, an augmented reality-based graphical overlay may be rapidly provided.

Meanwhile, a server virtual machine among the plurality of virtual machines may be configured to detect the object from the camera data through the first engine, and to transmit the graphical overlay, generated through the second engine based on the detected object, to an augmented reality application executed in a guest virtual machine through a shared memory. Accordingly, an augmented reality-based graphical overlay may be rapidly provided.

Meanwhile, a first guest virtual machine among the plurality of virtual machines may be configured to operate for a first display, and a second guest virtual machine among the plurality of virtual machines may be configured to operate for a second display or an image projection device. Accordingly, an augmented reality-based graphical overlay may be rapidly provided through the second display or the image projection device.

Meanwhile, a server virtual machine among the plurality of virtual machines may be configured to transmit the generated graphical overlay to a second guest machine through the shared memory. Accordingly, an augmented reality-based graphical overlay may be rapidly provided.

Meanwhile, a server virtual machine among the plurality of virtual machines may be configured to transmit the generated graphical overlay to the first guest machine through the shared memory.

Meanwhile, the server virtual machine among the plurality of virtual machines may be configured to generate guide information related to vehicle traveling through a third engine based on the sensor data from the sensor device and the map data from the memory, wherein the second engine may be configured to generate the graphical overlay based on the generated guide information related to vehicle traveling and the detected object and output the generated graphical overlay. Accordingly, an augmented reality-based graphical overlay including the guide information related to vehicle traveling may be rapidly provided.

Meanwhile, an input and output resource manager executed based on the hypervisor may be configured to receive the camera data from the camera or the sensor data from the sensor device and to provide the camera data or the sensor data to the first engine or the second engine. Accordingly, an augmented reality-based graphical overlay may be rapidly provided.

An augmented reality apparatus for a vehicle according to yet another embodiment of the present disclosure includes: at least one camera; and a signal processing device including a processor configured to generate a graphical overlay based on camera data from the camera. Accordingly, an augmented reality-based graphical overlay may be rapidly provided. In addition, an augmented reality-based graphical overlay may be rapidly and stably provided.

### BRIEF DESCRIPTION OF THE DRAWINGS

FIG. 1 is a view showing an example of the exterior and interior of a vehicle;
FIG. 2 is a view showing the external appearance of a display apparatus for vehicles according to an embodiment of the present disclosure;
FIG. 3 illustrates an example of an internal block diagram of the display apparatus for vehicles of FIG. 2;
FIG. 4 is a view showing a system driven in a signal processing device related to the present disclosure;
FIG. 5 is a view showing an example of a system driven in a signal processing device according to an embodiment of the present disclosure;
FIG. 6 is a view referred to in the description of operation of the system driven in the signal processing device according to the embodiment of the present disclosure;
FIGS. 7A to 9D are diagrams referred to in the description of FIG. 5 or FIG. 6;
FIGS. 10A and 10B are internal block diagrams illustrating various examples of an augmented reality apparatus for a vehicle associated with the present disclosure;
FIG. 11 is an exemplary internal block diagram illustrating an augmented reality apparatus for a vehicle according to an embodiment of the present disclosure;
FIGS. 12 to 17 are internal block diagrams illustrating an augmented reality apparatus for a vehicle according to various embodiments of the present disclosure;
FIGS. 18A to 18C are diagrams referred to in the description of a signal processing device of FIGS. 12 to 17;
FIG. 19 is an exemplary internal block diagram of a processor of FIGS. 11 to 17; and
FIGS. 20A to 20G are diagrams referred to in the description of FIG. 19.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

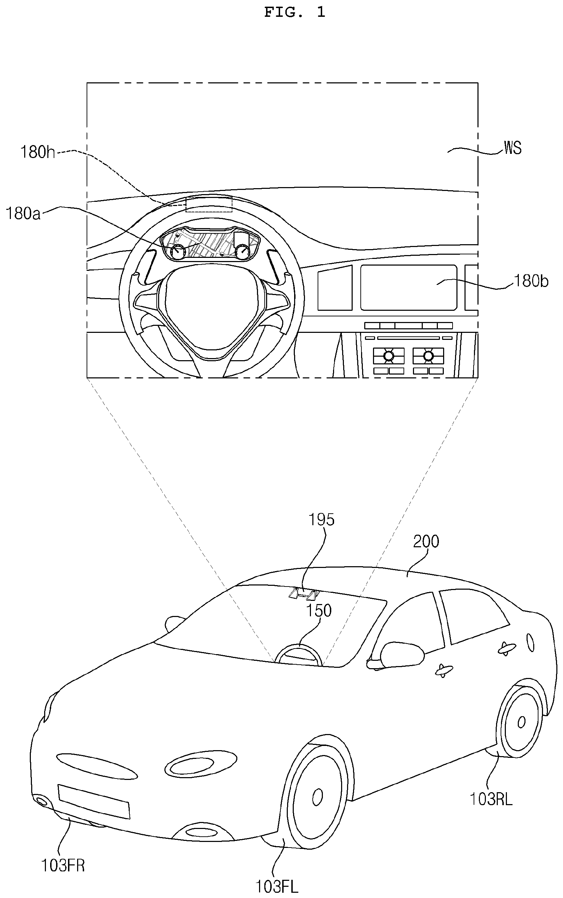

FIG. 1 is a view showing an example of the exterior and interior of a vehicle.

Referring to the figure, the vehicle 200 is moved by a plurality of wheels 103FR, 103FL, 103RL, ... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be provided therein with a plurality of displays 180a and 180b configured to display images, information, etc., and an image projection device 180h configured to project an image onto a windshield WS.

In FIG. 1, a cluster display 180a and an audio video navigation (AVN) display 180b are illustrated as the plurality of displays 180a and 180b, and the image projection device 180h is illustrated as the head-up display (HUD).

Meanwhile, the audio video navigation (AVN) display 180b may also be called a center information display.

Meanwhile, the vehicle 200 described in this specification may be a concept including all of a vehicle having an engine as a power source, a hybrid vehicle having an engine and an electric motor as a power source, and an electric vehicle having an electric motor as a power source.

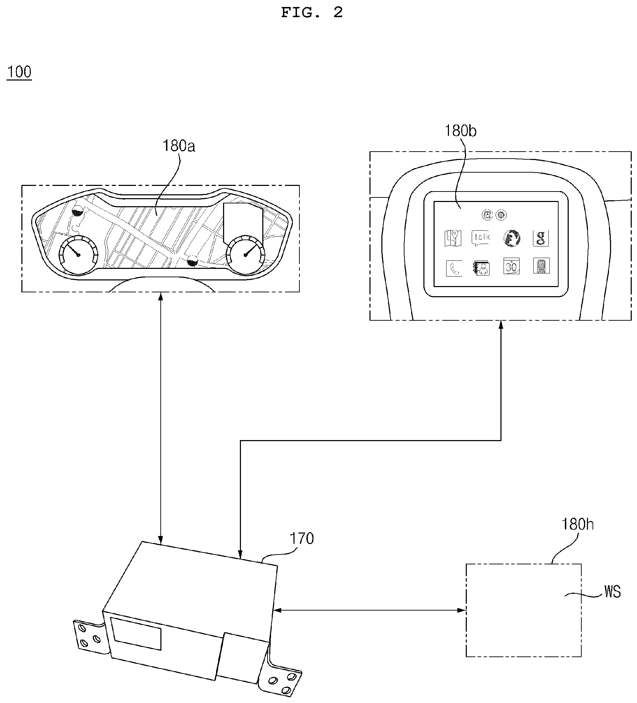

FIG. 2 is a view showing the external appearance of a display apparatus for vehicles according to an embodiment of the present disclosure.

A vehicle display apparatus 100 according to an embodiment of the present disclosure may include a plurality of displays 180a and 180b, an image projection device 180h, and a signal processing device 170 configured to perform signal processing for displaying images, information, and the like on the plurality of displays 180a and 180b and the image projection device 180h.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

The image projection device 180h, which is a head-up display (HUD), may include an optical device (not shown) for image projection.

The signal processing device 170 may include a shared memory 508 and a processor 175, and may execute first to third virtual machines 520 to 540 on a hypervisor 505 in the processor 175.

The first virtual machine 520, which is a server virtual machine, may control a second virtual machine 530 and a third virtual machine 50 which are guest virtual machines.

Meanwhile, the second virtual machine may be referred to as a first guest virtual machine, and the third virtual machine may be referred to as a second guest virtual machine.

The first guest virtual machine 530 may operate for the first display 180a, and the second guest virtual machine 540 may operate for the second display 180b.

Meanwhile, the server virtual machine 520 in the processor 715 may be configured to set up the shared memory 508 based on the hypervisor 505 for transmission of identical data to the first guest virtual machine 530 and the second guest virtual machine 540. Accordingly, the first display 180a and the second display 180b in a vehicle may display identical information or identical images in a synchronized manner.

Meanwhile, the server virtual machine 520 in the processor 175 may receive and process wheel speed sensor data of the vehicle, and may transmit the processed wheel speed sensor data to at least one of the first guest virtual machine 530 or the second guest virtual machine 540. Accordingly, at least one virtual machine may share the wheel speed sensor data of the vehicle.

Accordingly, it is possible to control various displays 180a and 180b and the image projection device 180h by using the single signal processing device 170.

Meanwhile, some of the plurality of displays 180a to 180b may be operated based on a Linux Operating System (OS), and others may be operated based on a Web Operating System (OS).

The signal processing device 170 according to the embodiment of the present disclosure may be configured to operate displays 180a to 180b under various operating systems also display identical information or identical images in a synchronized state.

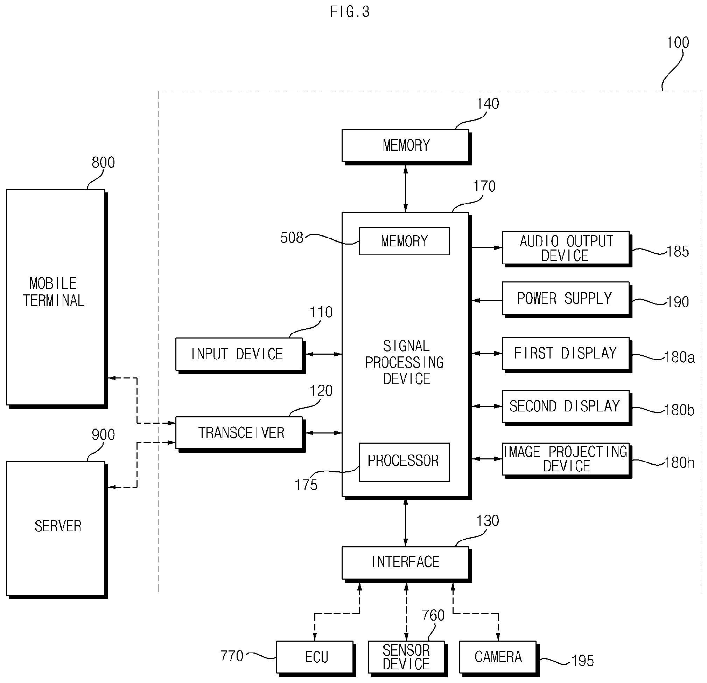

FIG. 3 illustrates an example of an internal block diagram of the display apparatus for vehicles according to the embodiment of the present disclosure.

Referring to FIG. 3, the vehicle display apparatus 100 according to the embodiment of the present disclosure may include an input device 110, a transceiver 120, an interface 130, a memory 140, a signal processing device 170, a plurality of displays 180a to 180b, an image projection device 180h, an audio output device 185, and a power supply 190.

The input device 110 may include a physical button or pad for button input or touch input.

Meanwhile, the input device 110 may include a microphone (not shown) for user voice input.

The transceiver 120 may wirelessly exchange data with a mobile terminal 800 or a server (not shown).

In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

The transceiver 120 may receive weather information and road traffic situation information, such as transport protocol expert group (TPEG) information, from the mobile terminal 800 or the server (not shown). To this end, the transceiver 120 may include a mobile communication module (not shown).

The interface 130 may receive sensor information from an electronic control unit (ECU) 770 or a sensor device 750, and may transmit the received information to the signal processing device 170.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, or in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

Meanwhile, the interface 130 may receive front-of-vehicle image data, side-of-vehicle image data, rear-of-vehicle image data, and obstacle-around-vehicle distance information from a camera 195 or lidar (not shown), and may transmit the received information to the signal processing device 170.

The memory 140 may store various data necessary for overall operation of the display apparatus 100 for vehicles, such as programs for processing or control of the signal processing device 170.

For example, the memory 140 may store data about the hypervisor, the server virtual machine 520, and the plurality of guest virtual machines which are to be executed in the processor 175.

The audio output device 185 may convert an electrical signal from the signal processing device 170 into an audio signal, and may output the audio signal. To this end, the audio output device 185 may include a speaker and the like.

The power supply 190 may supply power necessary to operate components under control of the signal processing device 170. In particular, the power supply 190 may receive power from a battery in the vehicle.

The image projection device 180h includes an optical device (not shown) for image projection and may be controlled by the signal processing device 170 to output an augmented reality-based object.

For example, the image projection device 180h may output vehicle speed information, vehicle heading direction information, a preceding vehicle object, an indicator of a distance to the preceding vehicle, and the like.

In another example, the image projection device 180h may output an augmented reality lane carpet corresponding to a lane image, an augmented reality route carpet, or an augmented reality dynamic carpet.

The signal processing device 170 may control the overall operation of each unit in the vehicle display apparatus 100.

For example, the signal processing device 170 may include the shared memory 508 and the processor 175 configured to perform signal processing for the displays 180a and 180b.

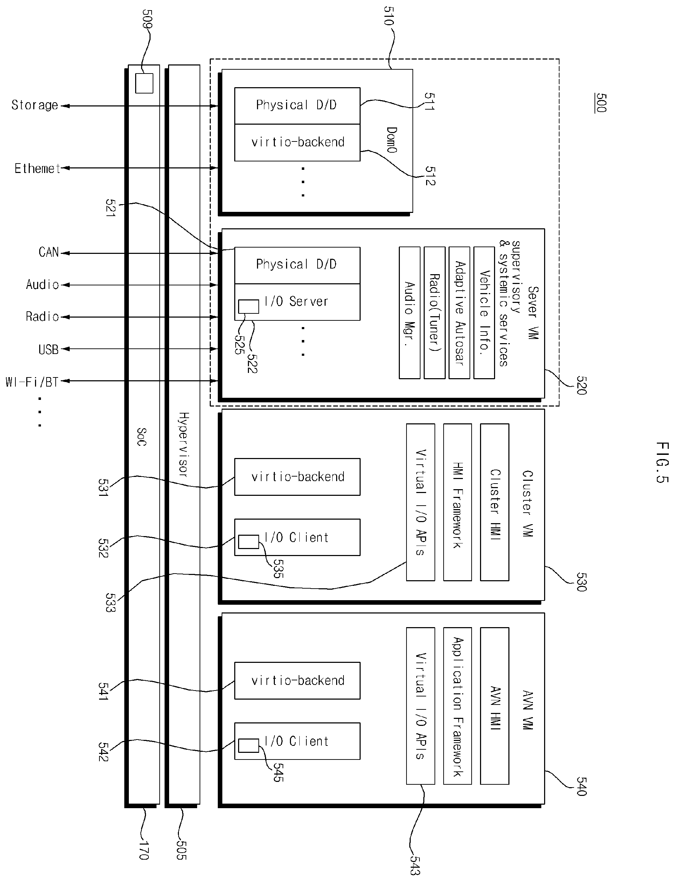

The processor 175 may execute the hypervisor 505 (see FIG. 5), and may execute the server virtual machine 520 and the plurality of guest virtual machines 530 and 540 on the hypervisor 505 that runs (see FIG. 5).

In this case, the first guest virtual machine 530 may operate for the first display 180a, and the second guest virtual machine 540 may operate for the second display 180b.

For example, the server virtual machine 520 in the processor 715 may receive, process, and output vehicle sensor data, position information data, camera image data, audio data, or touch input data. Data processing may be efficiently performed by separating data processed only by a legacy virtual machine and data processed by the server virtual machine 520. In particular, the server virtual machine 520 may process most of the data, thereby allowing 1:N data sharing.

In another example, the server virtual machine 520 may directly receive and process CAN communication data, audio data, radio data, USB data, and wireless communication data for the first and second guest virtual machines 530 and 540.

Further, the server virtual machine 520 may transmit the processed data to the first and second guest virtual machines 530 and 540.

Accordingly, among the server virtual machine 520 and the plurality of guest virtual machines 530 and 540, only the server virtual machine 520 may receive communication data and external input data and may perform signal processing, whereby load in signal processing by the other virtual machines may be reduced and 1:N data communication may be achieved, and therefore synchronization at the time of data sharing may be achieved.

Meanwhile, the server virtual machine 520 may be configured to write data in the shared memory 508, whereby the first guest virtual machine 530 and the second guest virtual machine 540 share identical data.

For example, the server virtual machine 520 may be configured to write vehicle sensor data, the position information data, the camera image data, or the touch input data in the shared memory 508, whereby the first guest virtual machine 530 and the second guest virtual machine 540 share identical data. Accordingly, 1:N data sharing may be achieved.

As a result, the server virtual machine 520 may process most of the data, thereby allowing 1:N data sharing.

Meanwhile, the server virtual machine 520 in the processor 175 may be configured to set up the shared memory 508 based on the hypervisor 505 for transmission of identical data to the first guest virtual machine 530 and the second guest virtual machine 540.

That is, the server virtual machine 520 in the processor 175 may transmit identical data to the first guest virtual machine 530 and the second guest virtual machine 540 in a synchronized manner by using the shared memory 508 based on the hypervisor 505. Accordingly, the plurality of displays 180a and 180b in the vehicle may display identical images in a synchronized manner.

Meanwhile, the signal processing device 170 may process various signals, such as an audio signal, an image signal, and a data signal. To this end, the signal processing device 170 may be implemented in the form of a system on chip (SOC).

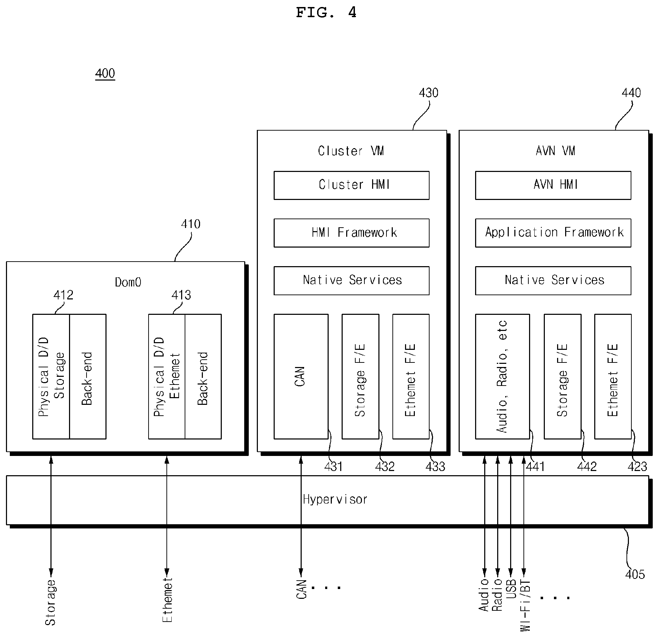

FIG. 4 is a view showing a system driven in a signal processing device related to the present disclosure.

Referring to the figure, FIG. 4 is a view illustrating that virtual machines are used for the cluster display 180a and the AVN display 180b.

The system 400 driven in the signal processing device of FIG. 4 illustrates that a cluster virtual machine 430 and an AVN virtual machine 440 are executed through a hypervisor 405 in the processor 175.

Meanwhile, the system 400 driven in the signal processing device of FIG. 4 illustrates that a legacy virtual machine 410 is also executed on the hypervisor 405 in the processor 175.

The legacy virtual machine 410 may include an interface 412 for data communication with the memory 140 and an interface 413 for Ethernet communication.

Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a drawback in that the cluster virtual machine 430 and the AVN virtual machine 440 are required to include the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are divided into the server virtual machine 520 and the guest virtual machines such that various memory data, communication data, and the like are input and output in the server virtual machine 520, instead of the guest virtual machines, which will be described below with reference to FIG. 5 and subsequent figures.

FIG. 5 is a view showing an example of a system running on a signal processing device according to an embodiment of the present disclosure.

Referring to the figure, a system 500 of FIG. 5 is illustrated in which the server virtual machine 520, which is a server virtual machine, and the first guest virtual machine 530 and the second guest virtual machine 540, which are guest virtual machines, are executed on the hypervisor 505 in the processor 175 of the signal processing device 170.

The first guest virtual machine 530 may be a virtual machine for the cluster display 180a, and the second guest virtual machine 540 may be a virtual machine for the AVN display 180b.

That is, the first guest virtual machine 530 and the second guest virtual machine 540 may be operated for image rendering of the cluster display 180a and the AVN display 180b, respectively.

Meanwhile, it is also illustrated that in the system 500 running on the signal processing device 170 of FIG. 5, a legacy virtual machine 510 is also executed on the hypervisor 505 in the processor 175.

The legacy virtual machine 510 may include an interface 511 for data communication and Ethernet communication with the memory 140.

Meanwhile, the legacy virtual machine 510 may further include a virtio-backend interface 512 for data communication with the first and second guest virtual machines 530 and 540.

The server virtual machine 520 may include an interface 521 for input and output of audio data, radio data, USB data, and wireless communication data, and an input and output server interface 522 for data communication with the guest virtual machines.

That is, the server virtual machine 520, which is a server virtual machine, may provide inputs/outputs (I/O) difficult to virtualize with standard virtualization technology (VirtIO) to a plurality of guest virtual machines, **e.g.,** the first and second guest virtual machines 530 and 540.

Meanwhile, the server virtual machine 520, which is a server virtual machine, may control radio data and audio data at a supervisor level, and may provide the data to a plurality of guest virtual machines, e.g., the first and second guest virtual machines 530 and 540, and the like.

Meanwhile, the server virtual machine 520, which is a server virtual machine, may process vehicle data, sensor data, and surroundings-of-vehicle information, and may provide the processed data or information to a plurality of guest virtual machines, e.g., the first and second guest virtual machines 530 and 540, and the like.

Meanwhile, the server virtual machine 520 may provide supervisory services, such as processing of vehicle data and audio routing management, and the like.

Next, the first guest virtual machine 530 may include an input and output client interface 532 for data communication with the server virtual machine 520 and APIs 533 configured to control the input and output client interface 532.

In addition, the first guest virtual machine 530 may include a virtio-backend interface for data communication with the legacy virtual machine 510.

The first guest virtual machine 530 may receive memory data by communication with the memory 140 and Ethernet data by Ethernet communication from the virtio-backend interface 512 of the legacy virtual machine 510 through the virtio-backend interface.

Next, the second guest virtual machine 540 may include an input and output client interface 542 for data communication with the server virtual machine 520 and APIs 543 configured to control the input and output client interface 542.

In addition, the second guest virtual machine 540 may include a virtio-backend interface for data communication with the legacy virtual machine 510.

The second guest virtual machine 540 may receive memory data by communication with the memory 140 and Ethernet data by Ethernet communication from the virtio-backend interface 512 of the legacy virtual machine 510 through the virtio-backend interface.

Meanwhile, unlike FIG. 5, the legacy virtual machine 510 may be provided in the server virtual machine 520.

In the system 500, CAN communication data, such as sensing data, are input and output only in the server virtual machine 520, but may be provided to a plurality of guest virtual machines, e.g., the first and second guest virtual machines 530 and 540, etc., through data processing in the server virtual machine 520. Accordingly, 1:N data communication by processing of the server virtual machine 520 may be achieved.

Also, in the system 500 of FIG. 5, audio data, radio data, USB data, and wireless communication data are input and output only in the server virtual machine 520, but may be provided to a plurality of guest virtual machines, e.g., the first and second guest virtual machines 530 and 540, etc., through data processing in the server virtual machine 520. Accordingly, 1:N data communication by processing of the server virtual machine 520 may be achieved.

Meanwhile, in the system 500 of FIG. 5, the first and second guest virtual machines 530 and 540 may operate on different operating systems.

For example, the first guest virtual machine 540 may operate on Linux OS, and the second guest virtual machine 540 may operate on a Web-based OS.

In the server virtual machine 520, the shared memory 508 based on the hypervisor 505 is set up for data sharing even when the first and second guest virtual machines 530 and 540 operate on different operating systems. Accordingly, even when the first and second guest virtual machines 530 and 540 operate on different operating systems, identical data or identical images may be shared in a synchronized manner. As a result, the plurality of displays 180a and 180b may display identical data or identical images in a synchronized manner.

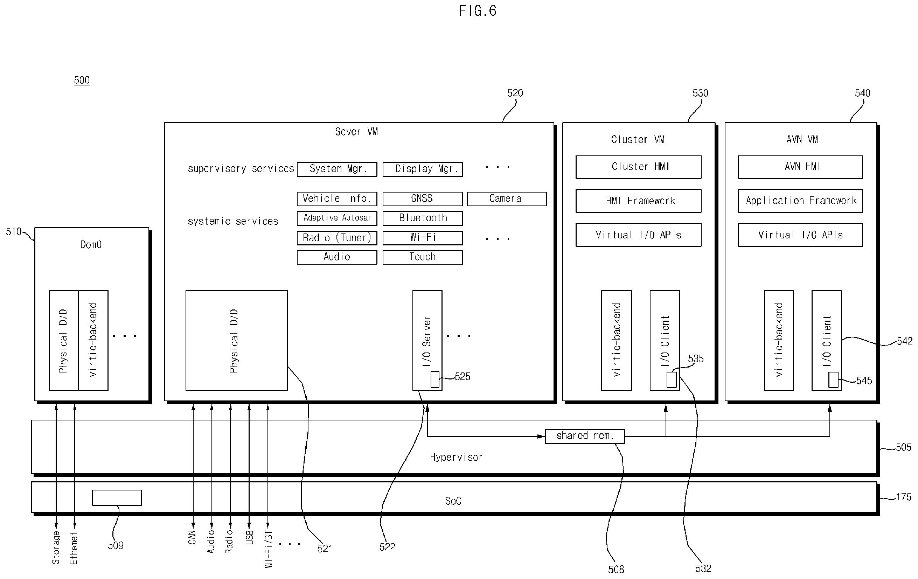

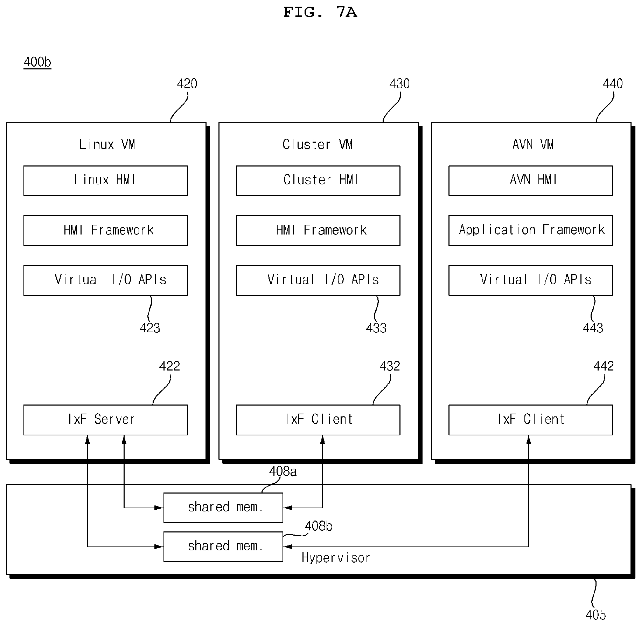

FIG. 6 is a diagram referred to in the description of operation of a system running on a signal processing device according to the embodiment of the present disclosure, and FIGS. 7A to 9D are diagrams referred to in the description of FIG. 5 or FIG. **6****.**

First, in the system 500 of FIG. **6****,** the processor 175 in the signal processing device 170 executes the server virtual machine 520 and the plurality of guest virtual machines 530 and 540 on the hypervisor 505 in the processor **175,** and the server virtual machine 520 in the processor 175 may be configured to set up the shared memory 508 based on the hypervisor 505 for data transmission to the first and second guest virtual machines 530 and 540.

For example, as an example of identical data, identical image data may be transmitted from the server virtual machine 520 to the first guest virtual machine 530 and the second guest virtual machine 540. Accordingly, the plurality of displays 180a and 180b in the vehicle may display identical images in a synchronized manner.

Meanwhile, in the system 500 of FIG. 6, the processor 175 in the signal processing device 170 executes the server virtual machine 520 and the plurality of guest virtual machines 530 and 540 on the hypervisor 505 in the processor 175, and the server virtual machine 520 in the processor 175 may transmit identical data to the first and second guest virtual machines 530 and 540 in a synchronized manner by using the shared memory 508 based on the hypervisor 505.

For example, examples of identical data may include CAN communication data, audio data, radio data, USB data, wireless communication data, position information data, or touch data, and the like. Accordingly, the plurality of displays 180a and 180b in the vehicle may display identical data in a synchronized manner.

Meanwhile, the server virtual machine 520 in the processor 175 may receive and process position information data that changes according to movement, and may provide the processed data to the first guest virtual machine 530 or the second guest virtual machine 540. Accordingly, instead of 1:1 data communication, 1:N data communication between the virtual machines may be achieved by using the shared memory.

Meanwhile, the first guest virtual machine 530 and the second guest virtual machine 540 may be driven by different operating systems. Accordingly, even when the plurality of virtual machines are driven by different operating systems, high-speed data communication may be performed.

Meanwhile, although not illustrated in FIG. 6, the legacy virtual machine 510 may transmit memory data from the memory 140 and Ethernet data by Ethernet communication to the first guest virtual machine 530 and the second guest virtual machines 540 in a synchronized manner by using the shared memory 508 based on the hypervisor 505. That is, 1:N data communication of the memory data or the Ethernet data may be performed. Accordingly, identical data may be transmitted in a synchronized manner.

Meanwhile, the server virtual machine 520 in the processor 175 may execute supervisory services, such as a system manager, a display manager, and the like.

Meanwhile, the server virtual machine 520 in the processor 175 may execute systemic services, such as vehicle information service, position information service, camera service, AUTOSAR, Bluetooth communication service, radio service, Wi-Fi service, audio service, touch service, and the like.

FIG. 7A is a diagram illustrating an example of three virtual machines 420, 420, and 430 operating on a system 400b of FIG. 4.

Referring to the figure, the server virtual machine 520 and 420 is a Linux-based virtual machine, and may include an input and output server interface 422 for data transmission, and the first guest virtual machine 530 and the second guest virtual machine 540 may include input and output client interfaces 432 and 552 for data communication with the input and output server interface 422.

For example, the server virtual machine 520 and 420 is required to set up a first shared memory 408a in a hypervisor 405 in order to transmit first data to the first guest virtual machine 430, and to set up a separate second shared memory 408b, different from the first shared memory 408a, in the hypervisor 405 in order to transmit the same first data to the second guest virtual machine 440.

If a separate shared memory is used for transmitting the same first data as illustrated in FIG. 7A, there is a drawback in that resources are wasted and synchronization is not easy.

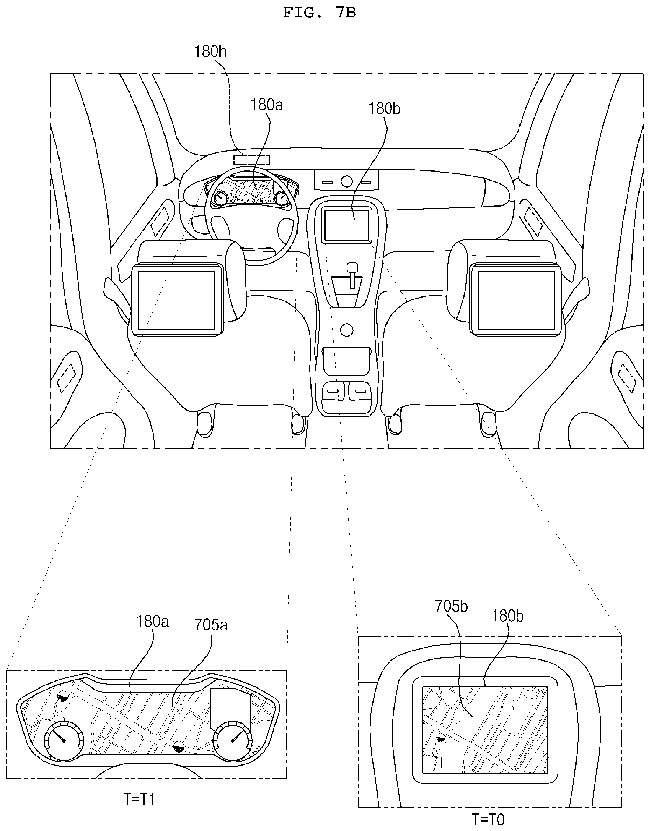

FIG. 7B illustrates an example in which, by the system 400b of FIG. 7A, the first guest virtual machine 430 displays image data received through the first shared memory 408a on the first display 180a, and the second guest virtual machine 440 displays image data received through the second shared memory 408b on the second display 180b.

FIG. 7B illustrates that an image 705a displayed on the first display 180a and an image 705b displayed on the second display 180b are not synchronized with each other and that the image 705b displayed on the second display 180b corresponds to a more previous frame than the image 705a displayed on the first display 180a.

As described above, if the first virtual machine 520 and 420 transmits identical image data based on the separate shared memory as illustrated in FIG. 7A, there is a drawback in that images may not be displayed in a synchronized manner as illustrated in FIG. 7B.

In order to solve this problem, the present disclosure proposes a scheme for allocating a single shared memory at the time of transmission of identical data. Consequently, 1:N data communication is performed, whereby synchronized data transmission is achieved.

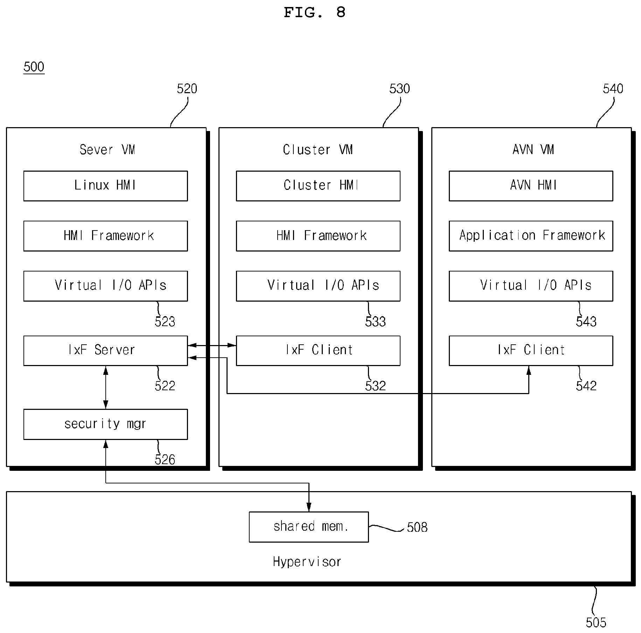

FIG. 8 is a diagram illustrating an example in which the server virtual machine 520 and the plurality of guest virtual machines 530 and 540 are executed on the hypervisor 505 in the processor 175 of the system 500, and the server virtual machine 520 in the processor 175 may be configured to set up the shared memory 508 based on the hypervisor 505 for transmission of identical data to the first guest virtual machine 530 and the second guest virtual machine 540.

Accordingly, the plurality of displays 180a and 180b in the vehicle may display identical images in a synchronized manner.

Meanwhile, high-speed data communication may be performed among the plurality of virtual machines 520, 530, and 540. Further, high-speed data communication may be performed even when the plurality of virtual machines 520, 530, and 540 are driven by different operating systems.

Meanwhile, the server virtual machine 520 in the processor 175 may transmit data, processed by the server virtual machine 520, to another virtual machine by using a single shared memory 508 instead of allocating memories, the number of which corresponds to the number of virtual machines. Accordingly, instead of 1:1 data communication, 1:N data communication between the virtual machines may be achieved by using the shared memory 508.

Meanwhile, the server virtual machine 520 in the processor 175 may include the input and output server interface 522 and a security manager 526.

Meanwhile, the first guest virtual machine 530 and the second guest virtual machine 540 may include input and output client interfaces 532 and 542, respectively. Accordingly, high-speed data communication between the plurality of virtual machines may be performed by using the input and output server interface 522 and the input and output client interfaces 532 and 542.

The input and output server interface 522 in the first virtual machine 520 may receive requests for transmission of identical data from the respective input and output client interfaces 532 and 542 in the first guest virtual machine 530 and the second guest virtual machine 540, and may transmit shared data to the shared memory 508 through the security manager 526 based thereon.

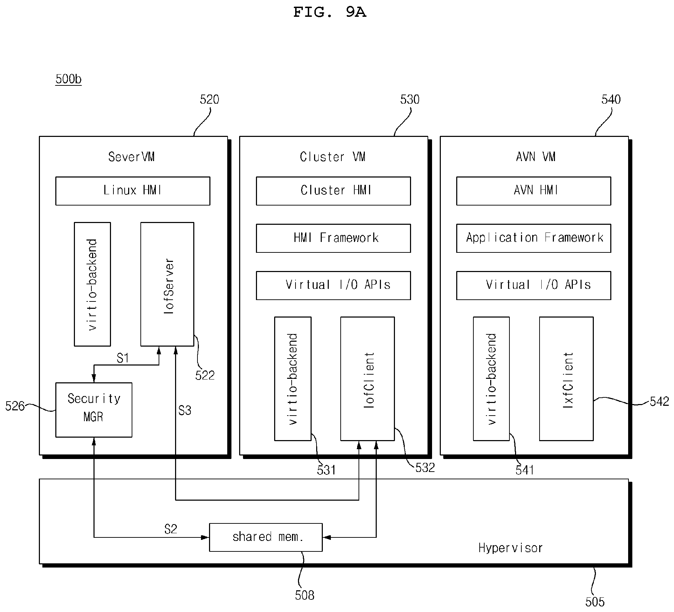

FIG. 9A is a diagram illustrating in further detail transmission of shared data.

Referring to the figure, in order to transmit shared data, the input and output server interface 522 in the server virtual machine 520 transmits a request for allocation of the shared memory 508 to the security manager 526 (S1).

Subsequently, the security manager 526 may allocate the shared memory 508 using the hypervisor 505 (S2), and may write shared data in the shared memory 508.

Meanwhile, the input and output client interfaces 532 and 542 may transmit a request for connection to the input and output server interface 522 after allocation of the shared memory 508 (S3).

Meanwhile, after allocation of the shared memory 508, the input and output server interface 522 transmits information regarding the shared memory 508 including key data to the input and output client interfaces 532 and 542 (S4). In this case, the key data may be data for data access.

That is, after setting up the shared memory 508, the server virtual machine 520 in the processor 175 may transmit information regarding the shared memory 508 to the first guest virtual machine 530 and the second guest virtual machine 540.

The input and output client interfaces 532 and 542 may access the shared memory 508 based on the received key data (S5), and may copy the shared data from the shared memory 508.

Accordingly, the first guest virtual machine 530 and the second guest virtual machine 540 may access the shared memory 508, and thus, may share the shared data.

For example, in the case in which the shared data are image data, the first guest virtual machine 530 and the second guest virtual machine 540 may share the image data, and thus, the plurality of displays 180a and 180b in the vehicle may display the same shared image in a synchronized manner.

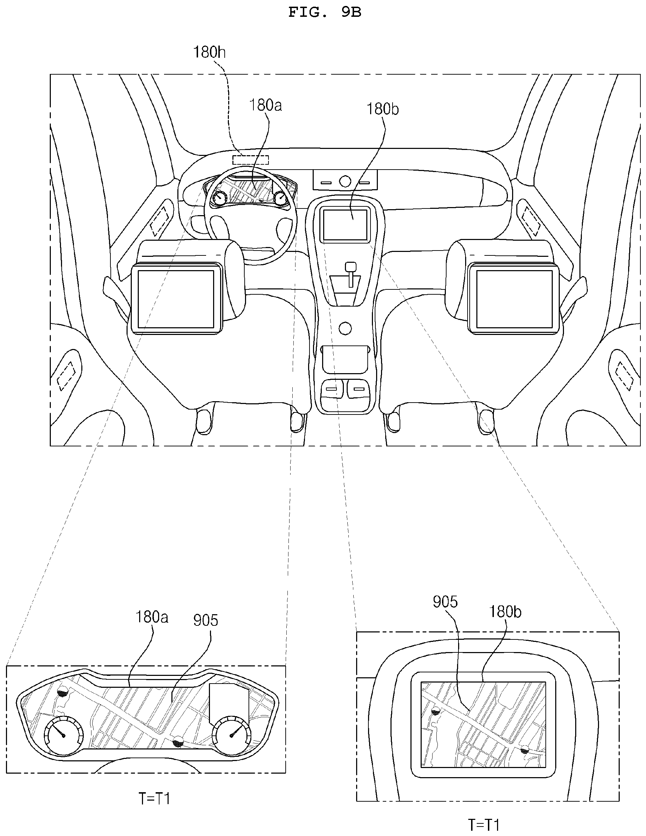

FIG. 9B illustrates an example in which, by the system 500 of FIG. 9A, the first guest virtual machine 530 displays image data received through the shared memory 508 on the first display 180a, and the second guest virtual machine 540 displays image data received through the shared memory 508 on the second display 180b.

FIG. 9B illustrates that an image 905 displayed on the first display 180a and an image 905 displayed on the second display 180b are synchronized, such that the same image may be displayed.

That is, image data processed by the server virtual machine 520 in the processor 175 are transmitted to the first guest virtual machine 530 and the second guest virtual machine 540 through the shared memory 508, and based on the image data, a first image 905 displayed on the first display 180a and a second image 905 displayed on the second display 180b may be identical to each other. Accordingly, the plurality of displays 180a and 180b in the vehicle may display the same images in a synchronized manner. Further, high-speed data communication among the plurality of virtual machines 520, 530, and 540 may be performed.

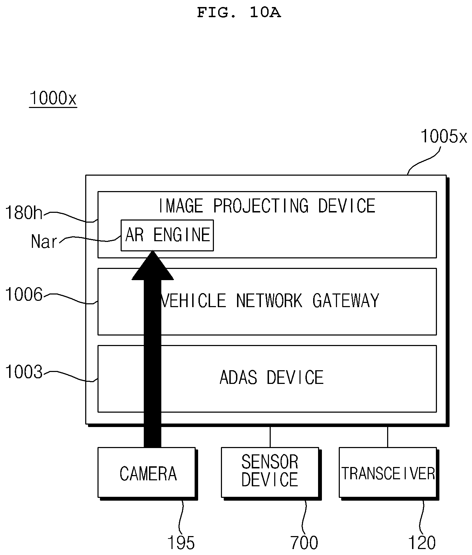

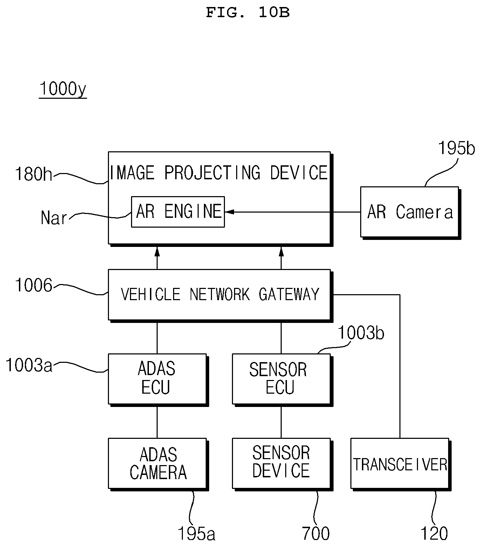

FIGS. 10A and 10B are internal block diagrams illustrating various examples of an augmented reality apparatus for a vehicle associated with the present disclosure.

First, FIG. 10A is an internal block diagram illustrating an example of an augmented reality apparatus for a vehicle (hereinafter referred to as an in-vehicle augmented reality apparatus) associated with the present disclosure.

Referring to FIG. 10A, an in-vehicle augmented reality apparatus 1000x associated with the present disclosure may include a camera 195, a sensor device 700, a transceiver 120, an ADAS device 1003 configured to detect an object based on camera data from the camera 195, a vehicle network gateway 1006 configured to transmit the detected object to an AR engine Nar in an image projection device 180h, and the image projection device 180h.

The AR engine Nar in the image projection device 180h may generate a graphical overlay based on the detected object and output the generated graphical overlay.

However, in the in-vehicle augmented reality apparatus 1000x, the ADAS device 1003 and the image projection device 180h are spaced apart from each other, and the detected object information and the like are transmitted through wired or wireless communication by the vehicle network gateway 1006, thereby causing a significant delay.

Particularly, when a delay occurs while the in-vehicle augmented reality apparatus 1000x provides guide information related to vehicle traveling, the delay causes safety problems.

Next, FIG. 10B is an exemplary internal block diagram of an in-vehicle augmented reality apparatus associated with the present disclosure.

Referring to FIG. 10B, an in-vehicle augmented reality apparatus 1000y associated with the present disclosure may include a camera 195, a sensor device 700, a transceiver 120, an ADAS ECU 1003a configured to detect an object based on camera data from the camera 195, a sensor ECU 1003b configured to process sensor data from the sensor device 700 and to output the processed data, a vehicle network gateway 1006 configured to transmit the detected object data from the ADAS ECU 1003a or the sensor data from the sensor ECU 1003b to an AR engine Nar in an image projection device 180h, an AR camera 195b, and an image projection device 180h.

The AR engine Nar in the image projection device 180h may generate a graphical overlay based on the detected object and output the generated graphical overlay.

However, in the in-vehicle augmented reality apparatus 1000y, the ADAS ECU 1003a and the image projection device 180h are spaced apart from each other, and the detected object information and the like are transmitted through wired or wireless communication by the vehicle network gateway 1006, thereby causing a significant delay.

Particularly, when a delay occurs while the in-vehicle augmented reality apparatus 1000y provides guide information related to vehicle traveling, the delay causes safety problems.

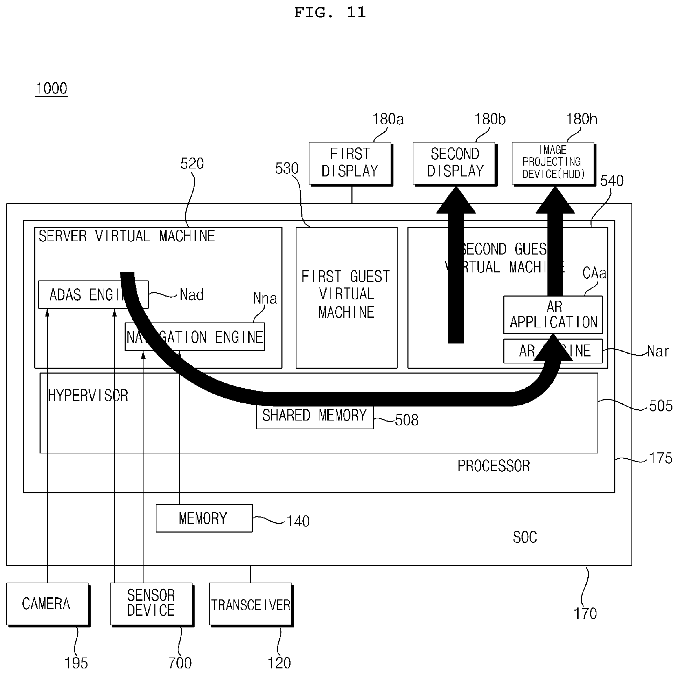

Accordingly, the present disclosure proposes a scheme for reducing the delay when providing guide information related to vehicle traveling. To this end, the signal processing device 170 according to an embodiment of the present disclosure executes a hypervisor 505 (see FIG. 11) and a plurality of virtual machines 520 to 540 (see FIG. 11) on the hypervisor 505, and transmits data through a shared memory 508 (see FIG. 11) based on the hypervisor 505, which will be described below with reference to FIG. 11.

FIG. 11 is an exemplary internal block diagram illustrating an augmented reality apparatus for a vehicle according to an embodiment of the present disclosure.

Referring to FIG. 11, an in-vehicle augmented reality (AR) apparatus 1000 according to the embodiment of the present disclosure includes at least one camera 195 and a signal processing device 170.

Meanwhile, the in-vehicle augmented reality apparatus 1000 according to the embodiment of the present disclosure may further include an image projection device 180h.

Meanwhile, the in-vehicle augmented reality apparatus 1000 according to the embodiment of the present disclosure may further include a plurality of displays 180a and 180b.

Meanwhile, the in-vehicle augmented reality apparatus 1000 according to the embodiment of the present disclosure may further include a sensor device 700 and a transceiver 120.

Meanwhile, the signal processing device 170 according to the embodiment of the present disclosure may receive a signal from the camera 195, the sensor device 700, or the transceiver 120, and may perform signal processing to output an image signal to a first display 180a, a second display 180b, or the image projection device 180h.

The signal processing device 170 according to the embodiment of the present disclosure may include a memory 140 configured to store map data, and a processor 175 configured to generate a graphical overlay based on camera data from the camera 195, or the map data, or the sensor data from the sensor device 700.

Meanwhile, the processor 175 may execute a plurality of virtual machines 520 to 540 on an executed hypervisor 505, may detect an object from the camera data through a first engine Nad executed in one of the plurality of virtual machines 520 to 540, may transmit the detected object to a second engine Nar through the shared memory 508 based on the hypervisor 505, and may generate a graphical overlay based on the detected object through the second engine Nar executed in some of the plurality of virtual machines 520 to 540 and output the generated graphical overlay.

Accordingly, the augmented reality-based graphical overlay may be rapidly provided. Particularly, even when the first engine Nad and the second engine Nar are executed in different virtual machines, the augmented reality-based graphical overlay may be rapidly and stably provided by sharing the detected object using the shared memory.

In this case, the graphical overlay may include vehicle speed information, vehicle heading direction information, a preceding vehicle object, an indicator of a distance to the preceding vehicle, and the like.

Accordingly, safety information and the like for a driver during vehicle driving may be stably provided.

Meanwhile, as described above, the processor 175 may execute the hypervisor 505, and may set the shared memory 508 based on the executed hypervisor 505.

Meanwhile, the processor 175 may execute the first engine Nad based on the camera data from the camera 195 and the sensor data from the sensor device 700. In this case, the first engine Nad may be an Advanced Driver Assistance System (ADAS) engine.

By executing the ADAS engine Nad, the processor 175 may detect objects at the front, rear, and sides of the vehicle.

Particularly, by executing the ADAS engine Nad, the processor 175 may detect a preceding vehicle object or a lane object in front of the vehicle, and the like.

Meanwhile, the processor 175 may execute the second engine Nar based on a detected object 1007 through the shared memory 508 based on the hypervisor 505. In this case, the second engine Nar may be an Augmented Reality (AR) engine.

By executing the AR engine Nar, the processor 175 may generate and output a graphical overlay 1210.

Meanwhile, the processor 175 may execute a third engine Nna based on the sensor data from the sensor device 700 and the map data from the memory 140. In this case, the third engine Nna may be a navigation engine Nna.

By executing the navigation engine Nna, the processor 175 may generate guide information related to vehicle traveling and the like.

Particularly, by executing the navigation engine Nna, the processor 175 may generate guide information related to vehicle traveling.

In this case, the guide information related to vehicle traveling may include vehicle speed information and vehicle heading direction information.

Meanwhile, the processor 175 may execute a second engine Narb based on the camera data from the camera 195, or the map data from the memory 140, or the sensor data from the sensor device 700.

For example, by executing the second engine Narb based on the camera data from the camera 195, or the map data from the memory 140, or the sensor data from the sensor device 700, the processor 175 may generate a graphical overlay including vehicle speed information, vehicle heading direction information, a preceding vehicle object, or an indicator of a distance to the preceding vehicle.

Meanwhile, by executing the first engine Nad, the processor 175 may detect a preceding vehicle object or a lane object in front of the vehicle, and the like.

Meanwhile, the processor 175 may execute an AR application CAa for the first display 180a, the second display 180b, or the image projection device 180h.

Particularly, the processor 175 may execute the AR application CAa for the image projection device 180h.

Meanwhile, the processor 175 may superimpose the graphical overlay on the detected object. Accordingly, the augmented reality-based graphical overlay may be rapidly provided.

In the drawing, an example is illustrated in which the processor 175 executes the plurality of virtual machines 520 to 540 on the hypervisor 505.

A server virtual machine 520 among the plurality of virtual machines 520 to 540 may detect an object from the camera data through the first engine Nad, and a guest virtual machine 530 or 540 among the plurality of virtual machines 520 to 540 may generate a graphical overlay based on the detected object through the second engine Nar and output the generated graphical overlay.

Meanwhile, a first guest virtual machine 530 may operate for the first display 180a, and a second guest virtual machine 540 may operate for the second display 180b or the image projection device 180h.

Meanwhile, the second guest virtual machine 540 may execute the AR application CAa and the second engine Nar.

Meanwhile, the second guest virtual machine 540 may receive the object data, detected using the first engine Nad, through the shared memory 508, and may generate a graphical overlay based on the detected object through the second engine Nar and output the generated graphical overlay to the image projection device 180h. Accordingly, an augmented reality-based graphical overlay may be rapidly provided through the image projection device 180h.

Meanwhile, as illustrated herein, the graphical overlay generated through the second engine Nar may be provided to the AR application CAa, and the AR application CAa may provide the graphical overlay to the image projection device 180h. Accordingly, an augmented reality-based graphical overlay may be rapidly provided through the image projection device 180h.

Meanwhile, the server virtual machine 520 may execute the first engine Nad and the third engine Nna.

For example, the server virtual machine 520 may generate guide information related to vehicle traveling by using the third engine Nna based on the sensor data from the second device 700 and the map data from the memory 140.

The second engine Nar in the second guest virtual machine 540 may receive the generated guide information related to vehicle traveling and the detected object data through the shared memory 508, and may generate a graphical overlay based on the guide information related to vehicle traveling and the detected object data. Accordingly, an augmented reality-based graphical overlay including the guide information related to vehicle traveling may be rapidly provided.

Meanwhile, the first engine Nad, the second engine Nar, and the third engine Nna may be referred to as an ADAS processor Nad, an augmented reality processor Nar, and a navigation processor Nna, respectively.

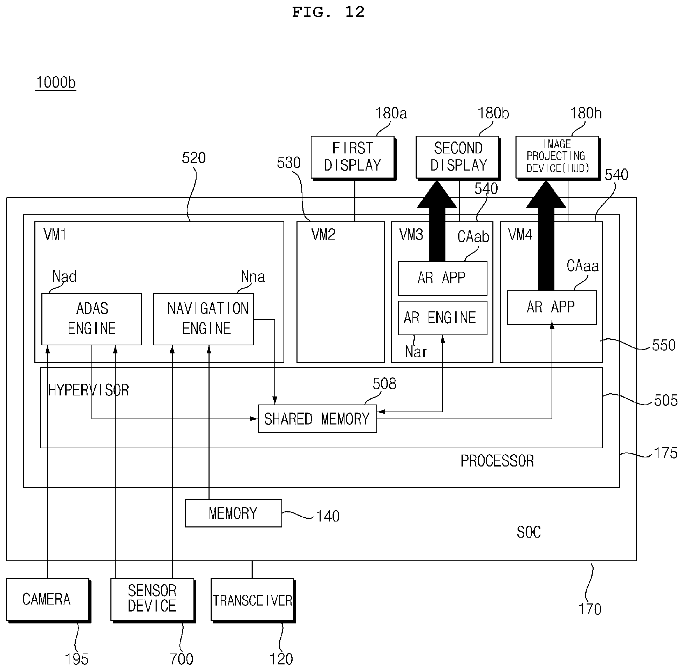

FIGS. 12 to 17 are internal block diagrams illustrating an augmented reality apparatus for a vehicle according to various embodiments of the present disclosure.

FIG. 12 is an internal block diagram illustrating an in-vehicle augmented reality apparatus according to another embodiment of the present disclosure.

Referring to FIG. 12, an in-vehicle augmented reality apparatus 1000b according to another embodiment of the present disclosure is similar to the in-vehicle augmented reality apparatus 1000 of FIG. 11, but is different in that three guest virtual machines instead of two are executed, and a graphical overlay output from the second engine Nar is output to the second display 180b.

The processor 175 in the signal processing device 170 according to another embodiment of the present disclosure may execute a server virtual machine 520, a first guest virtual machine 530, a second guest virtual machine 540, and a third guest virtual machine 550.

The server virtual machine 520 may execute the first engine Nad and the third engine Nna.

The server virtual machine 520 may transmit object data, detected using the first engine Nad, and the guide information related to vehicle traveling, generated using the third engine Nna, to the shared memory 508.

Meanwhile, the first guest virtual machine 530, the second guest virtual machine 540, and the third guest virtual machine 550 may operate for the first display 180a, the second display 180b, and the image projection device 180h, respectively.

Meanwhile, the second guest virtual machine 540 may execute an AR application CAab and the second engine Nar.

Meanwhile, the second guest virtual machine 540 may receive the object data, detected using the first engine Nad, through the shared memory 508 and may generate a graphical overlay based on the detected object through the second engine Nar and output the generated graphical overlay to the second display 180b. Accordingly, an augmented reality-based graphical overlay may be rapidly provided through the second display 180b.

Meanwhile, as illustrated herein, the graphical overlay generated by the second engine Nar may be provided to the AR application CAab, and the AR application CAab may provide the graphical overlay to the second display 180b. Accordingly, an augmented reality-based graphical overlay may be rapidly provided through the second display 180b.

Meanwhile, the second engine Nar in the second guest virtual machine 540 may receive the generated guide information related to vehicle traveling and the detected object data through the shared memory 508, and may generate a graphical overlay based on the guide information related to vehicle traveling and the detected object data and output the generated graphical overlay. Accordingly, an augmented reality-based graphical overlay including the guide information related to vehicle traveling may be rapidly provided.

Meanwhile, the graphical overlay generated by the second engine Nar in the second guest virtual machine 540 may be transmitted to the third guest virtual machine 550 through the shared memory 508.

The third guest virtual machine 550 may control the graphical overlay, generated by the second engine Nar, to be output to the image projection device 180h through a running AR application CAaa. Accordingly, the second display 180b and the image projection device 180h may display the graphical overlay in a synchronized manner.

Meanwhile, unlike FIG. 12, it is also possible that the second engine Nar is executed in the third guest virtual machine 550, and a graphical overlay generated by the second engine Nar in the third guest virtual machine 550 is transmitted to the second guest virtual machine 540 through the shared memory 508. Accordingly, the second display 180b and the image projection device 180h may display the graphical overlay in a synchronized manner.

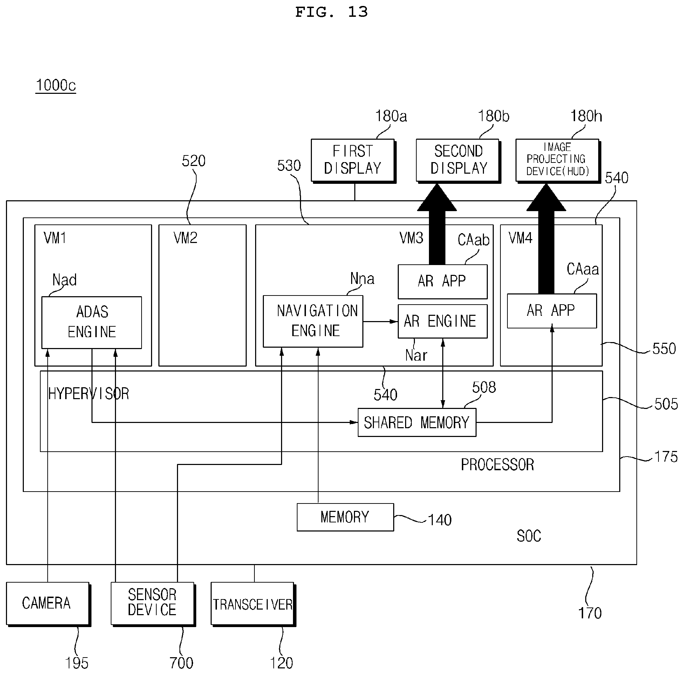

FIG. 13 is an internal block diagram illustrating an in-vehicle augmented reality apparatus according to yet another embodiment of the present disclosure.

Referring to FIG. 13, an in-vehicle augmented reality apparatus 1000c according to yet another embodiment of the present disclosure is similar to the in-vehicle augmented reality apparatus 1000b of FIG. 12, but is different in that the third engine Nna is executed in the guest virtual machine, rather than in the server virtual machine 520.

The guest virtual machine 530, 540, or 550 among the plurality of virtual machines 520 to 540 may generate guide information related to vehicle traveling, based on the sensor data from the sensor device 700 and the map data from the memory 140.

In the drawing, an example is illustrated in which the third engine Nna is executed in the second guest virtual machine 540.

The server virtual machine 520 may transmit the object data, detected using the first engine Nad, to the shared memory 508.

Meanwhile, the second guest virtual machine 540 may execute an AR application CA, the second engine Nar, and the third engine Nna.

Meanwhile, the second guest virtual machine 540 may receive the sensor data from the sensor device 700 and the map data from the memory 140, and the third engine Nna may generate the guide information related to vehicle driving based on the sensor data and the map data.

Meanwhile, the second engine Nar in the second guest virtual machine 540 may receive the detected object data through the shared memory 508, and may generate a graphical overlay based on the detected object data and the guide information related to vehicle traveling generated by the third engine Nna and output the generated graphical overlay. Accordingly, an augmented reality-based graphical overlay, including the guide information related to vehicle traveling, may be rapidly provided.

Meanwhile, the graphical overlay generated by the second engine Nar in the second guest virtual machine 540, may be transmitted to the third guest virtual machine 550 through the shared memory 508.

The third guest virtual machine 550 may control the graphical overlay, generated by the second engine Nar, to be output to the image projection device 180h through a running AR application CAaa. Accordingly, the second display 180b and the image projection device 180h may display the graphical overlay in a synchronized manner.

Meanwhile, unlike FIG. 13, it is also possible that the second engine Nar is executed in the third guest virtual machine 550, and the graphical overlay generated by the second engine Nar in the third guest virtual machine 550 is transmitted to the second guest virtual machine 540 through the shared memory 508. Accordingly, the second display 180b and the image projection device 180h may display the graphical overlay in a synchronized manner.

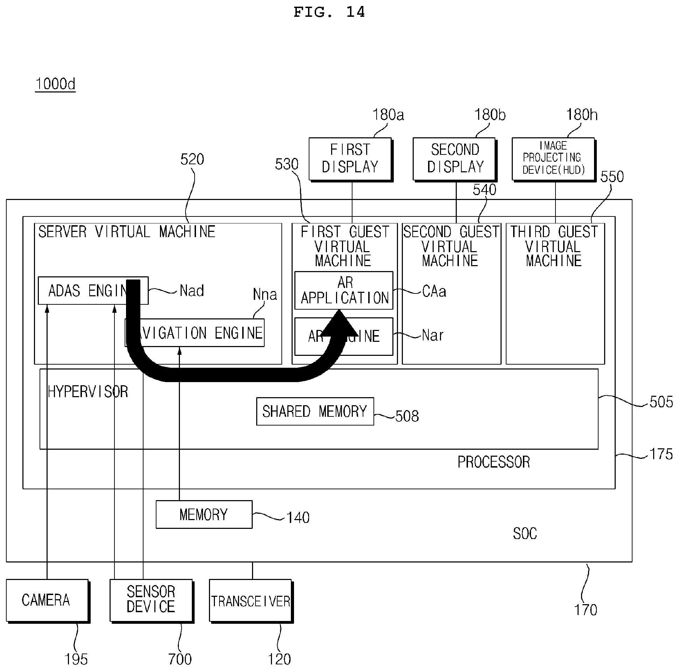

FIG. 14 is an internal block diagram illustrating an in-vehicle augmented reality apparatus according to further another embodiment of the present disclosure.

Referring to FIG. 14, an in-vehicle augmented reality apparatus 1000d according to further another embodiment of the present disclosure is similar to the in-vehicle augmented reality apparatus 1000b of FIG. 12, but is different in that the AR application CAa and the second engine Nar are executed in the first guest virtual machine 530.

The server virtual machine 520 may transmit the object data, detected using the first engine Nad, to the shared memory 508.

Meanwhile, the server virtual machine 520 may transmit the guide information related to vehicle traveling, generated by the third engine Nna, to the shared memory 508.

Meanwhile, the first guest virtual machine 530 may execute an AR application CAa and the second engine Nar.

Meanwhile, as illustrated herein, the graphical overlay generated by the second engine Nar may be provided to the AR application CAa, and the AR application CAa may provide the graphical overlay to the first display 180a. Accordingly, an augmented reality-based graphical overlay may be rapidly provided through the first display 180a.

Meanwhile, the second engine Nar in the first guest virtual machine 530 may receive the generated guide information related to vehicle traveling and the detected object data through the shared memory 508, and may generate a graphical overlay based on the guide information related to vehicle traveling and the detected object data and output the generated graphical overlay. Accordingly, an augmented reality-based graphical overlay including the guide information related to vehicle traveling may be rapidly provided.

Meanwhile, it is also possible that the graphical overlay generated by the second engine Nar in the first guest virtual machine 530 is transmitted to the second guest virtual machine 540 or the third guest virtual machine 540 through the shared memory 508. Accordingly, the second display 180b or the image projection device 180h may display the graphical overlay, displayed on the first display 180a, in a synchronized manner.

Meanwhile, unlike FIGS. 11 to 14, the first engine NAad and the second engine Nar may also be executed in the same virtual machine.

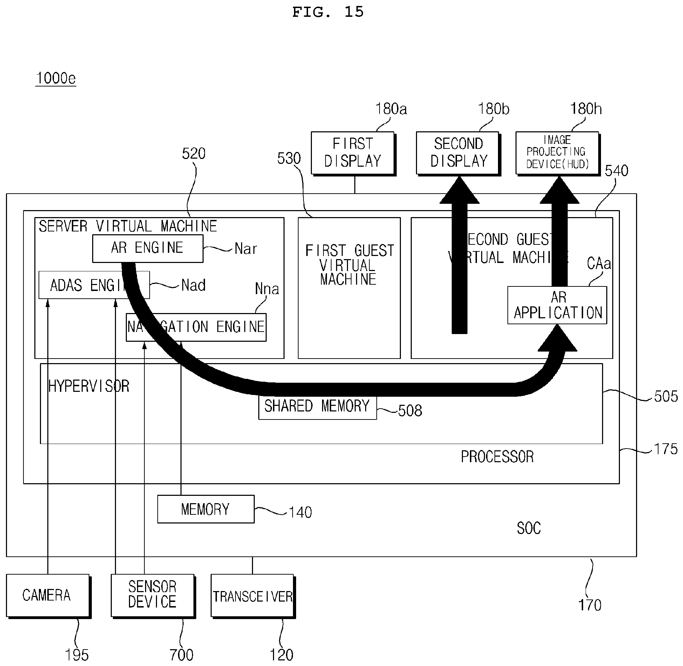

The processor 175 in the signal processing device 170 according to yet another embodiment of the present disclosure executes a plurality of virtual machines 520 to 540 on an executed hypervisor 505, detects an object from camera data through a first engine Nad executed in some of the plurality of virtual machines 520 to 540, generates a graphical overlay based on the detected object by using a second engine Nar, and transmits the generated graphical overlay 1210 to another virtual machine among the plurality of virtual machines 520 to 540 through the shared memory 508 based on the hypervisor 505, which will be described below with reference to FIGS. 15 to 17.

FIG. 15 is an internal block diagram illustrating an in-vehicle augmented reality apparatus according to yet another embodiment of the present disclosure.

Referring to FIG. 15, an in-vehicle augmented reality apparatus 1000e according to yet another embodiment of the present disclosure is similar to the in-vehicle augmented reality apparatus 1000 of FIG. 11, but is different in that the second engine Nar is executed in the server virtual machine 520.

That is, the server virtual machine 520 may execute the first engine Nad, the second engine Nar, and the third engine Nna.

As illustrated in FIG. 15, the first guest virtual machine 530 among the plurality of virtual machines 520 to 540 may operate for the first display 180a, and the second guest virtual machine 540 among the plurality of virtual machines 520 to 540 may operate for the second display 180b or the image projection device 180h.

Meanwhile, the server virtual machine 520 among the plurality of virtual machines 520 to 540 may detect an object from camera data through the first engine Nad, and may generate a graphical overlay based on the detected object 1007 through the second engine Nar.

Further, the server virtual machine 520 may transmit the generated graphical overlay to an augmented reality application CAa, executed in the guest virtual machine 530 or 540, through the shared memory 508.

For example, the server virtual machine 520 may transmit the generated graphical overlay to the second guest virtual machine 540 through the shared memory 508.

Meanwhile, the second guest virtual machine 540 may control the graphical overlay to be output to at least one of the second display 180b or the image projection device 180h through the running augmented reality application CAa. Accordingly, an augmented reality-based graphical overlay may be rapidly provided.

In another example, the server virtual machine 520 may transmit the generated graphical overlay to the first guest virtual machine 530 through the shared memory 508.

Meanwhile, the first guest virtual machine 530 may control the graphical overlay to be output to the first display 180a through a running augmented reality application (not shown). Accordingly, an augmented reality-based graphical overlay may be rapidly provided.

Meanwhile, the server virtual machine 520 may generate guide information related to vehicle traveling by using the third engine Nna based on the sensor data from the sensor device 700 and the map data from the memory 140, and the second engine Nar may generate a graphical overlay based on the generated guide information related to vehicle traveling and the detected object 1007 and output the generated graphical overlay.

Further, the server virtual machine 520 may transmit the graphical overlay, including the guide information related to vehicle traveling, to the augmented reality application CAa, executed in the guest virtual machine 530 or 540, through the shared memory 508.

Accordingly, the graphical overlay, including the guide information related to vehicle traveling, may be output to at least one of the first display 180a, the second display 180b, and the image projection device 180h.

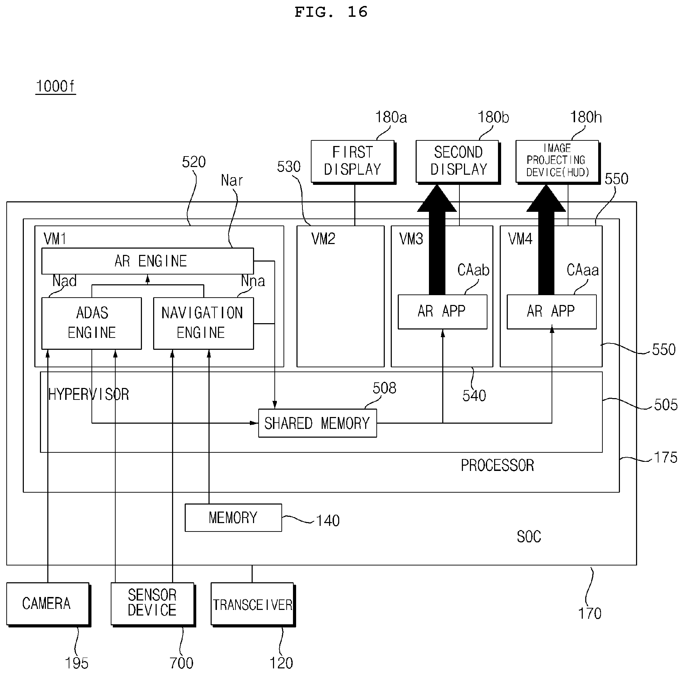

FIG. 16 is an internal block diagram illustrating an in-vehicle augmented reality apparatus according to yet another embodiment of the present disclosure.

Referring to FIG. 16, an in-vehicle augmented reality apparatus 1000f according to yet another embodiment of the present disclosure is similar to the in-vehicle augmented reality apparatus 1000e of FIG. 15, but is different in that three guest virtual machines instead of two are executed.

Meanwhile, the first guest virtual machine 530, the second guest virtual machine 540, and the third virtual machine 550 may operate for the first display 180a, the second display 180b, and the image projection device 180h, respectively.

In the drawing, an example is illustrated in which augmented reality applications CAab and CAaa are executed in the second guest virtual machine 540 and the third guest virtual machine 550, respectively.

Accordingly, a graphical overlay generated in the server virtual machine 520 may be output to at least one of the second display 180b or the image projection device 180h.

Meanwhile, the server virtual machine 520 may store the graphical overlay, including the guide information related to vehicle traveling, in the shared memory 508 based on execution of the third engine Nna.

Accordingly, the graphical overlay, including the guide information related to vehicle traveling, may be output to at least one of the first display 180a, the second display 180b, or the image projection device 180h.

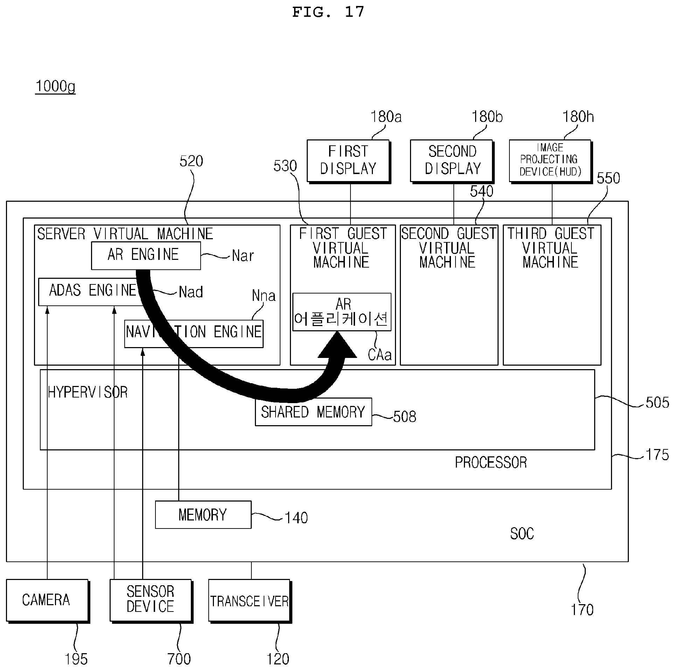

FIG. 17 is an internal block diagram illustrating an in-vehicle augmented reality apparatus according to yet another embodiment of the present disclosure.

Referring to FIG. 17, an in-vehicle augmented reality apparatus 1000g according to yet another embodiment of the present disclosure is similar to the in-vehicle augmented reality apparatus 1000f of FIG. 16, but is different in that the augmented reality application CAa is executed in the first guest virtual machine 530.

Accordingly, the graphical overlay generated in the server virtual machine 520 may be output to the first display 180a.

Meanwhile, the server virtual machine 520 may store the graphical overlay, including the guide information related to vehicle traveling, in the shared memory 508 based on execution of the third engine Nna.

Accordingly, the graphical overlay, including the guide information related to vehicle traveling, may be output to the first display 180a.

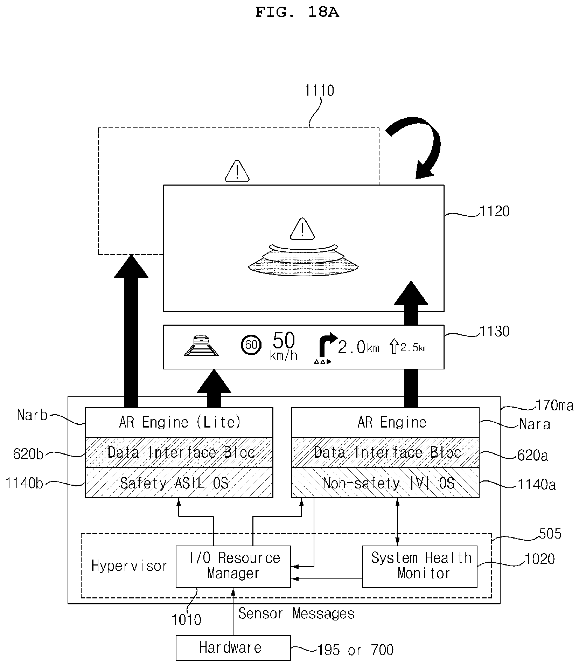

FIGS. 18A to 18C are diagrams referred to in the description of the signal processing device of FIGS. 12 to 17.

First, FIG. 18A is a diagram illustrating an example of the signal processing device of FIGS. 11 to 17.

Referring to FIG. 18A, a signal processing device 170ma may execute a first augmented reality engine Nara on a first operating system 1140a, and may execute a second augmented reality engine Narb on a second operating system 1140b different from the first operating system 1140a.

For example, the signal processing device 170ma may execute the second guest virtual machine 540 based on the first operating system 1140a and execute the first augmented reality engine Nara on the first operating system 1140a, and may execute the server virtual machine 520 based on the second operating system 1140b and execute the second augmented reality engine Narb on the second operating system 1140b.

Meanwhile, the first operating system 1140a may be a Non-safety IVI OS, and the second operating system 1140b may be a safety ASIL OS.

Meanwhile, the second operating system 1140b may be a Lite version of the first augmented reality engine Nara.

As described above, the first augmented reality engine Nara and the second augmented reality engine Narb are executed separately, such that when operation of the first augmented reality engine Nara is stopped unexpectedly, it is possible to rapidly restore the first augmented reality engine Nara by using the second augmented reality engine Narb. Accordingly, the augmented reality-based overlay may be stably and rapidly provided.

Meanwhile, the input and output resource manager 1010 executed based on the hypervisor 505 may receive the camera data or the sensor data from the camera 195 or the sensor device 700, respectively, and may provide the camera data or the sensor data to the first engine Nara or the second engine Narb.

Meanwhile, when providing the camera data or the sensor data to the second engine Nar which is an augmented reality engine, the input and output resource manager 1010 executed based on the hypervisor 505 may provide the data to the first augmented reality engine Nara and the second augmented reality engine Narb.

Meanwhile, the system monitor 1020 executed based on the hypervisor 505 may detect interruption of the first augmented reality engine Nara or detect restoration of the first augmented reality engine Nara.

For example, the system monitor 1020 may transmit a heartbeat signal to the first augmented reality engine Nara, and based on whether a response signal is received in response to the heartbeat signal, the system monitor 1020 may determine whether operation of the first augmented reality engine Nara is stopped or restored.

In another example, while the operation of the first augmented reality engine Nara is stopped, if the system monitor 1020 transmits a heartbeat signal to the first augmented reality engine Nara and receives a response signal from the first augmented reality engine Nara within a predetermined period of time, the system monitor 1020 may determine that the operation of the first augmented reality engine Nara is restored.

Meanwhile, in the case in which the system monitor 1020 executed in the hypervisor 505 detects interruption of the first augmented reality engine Nara, the second augmented reality engine Narb may generate and output the second graphical overlay 1220 by using the input and output resource manager 1010 based on the hypervisor 505.

Meanwhile, in the case in which the system monitor 1020 executed in the hypervisor 505 detects restoration of the first augmented reality engine Nara, the second augmented reality engine Narb may transmit data related to the second graphical overlay 1220 to the first augmented reality engine Nara by using the input and output resource manager 1010. Accordingly, the augmented reality-based first graphical overlay 1210 or second graphical overlay 1210 may be rapidly provided.

Meanwhile, FIG. 18A illustrates an example in which a first data interface 620a and a second data interface 620b are executed on the first operating system 1140a and the second operating system 1140b, respectively, but other operations are also possible.

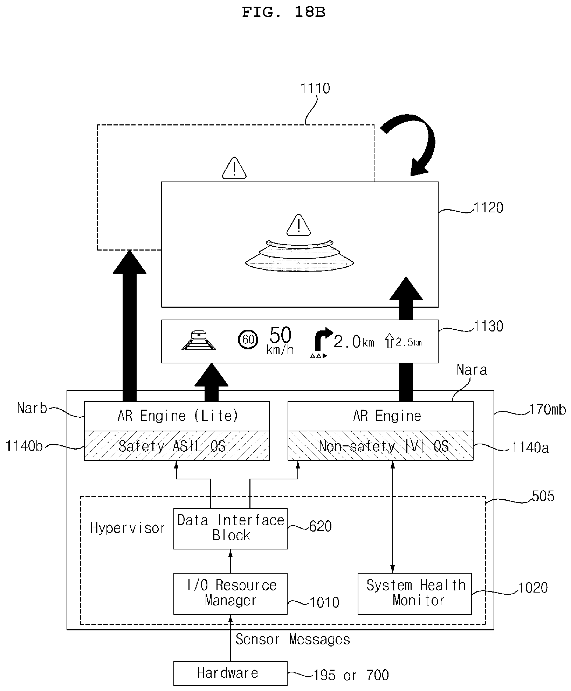

That is, it is also possible that a single data interface is included in the signal processing device, which will be described below with reference to FIG. 18B.

Next, FIG. 18B is a diagram illustrating another example of the interior of the signal processing device of FIGS. 11 to 17.

Referring to FIG. 18B, unlike FIG. 18A, a signal processing device 170mb may execute a data interface 620 based on the hypervisor 505, and the data interface 620 may transmit the camera data from the camera 195, or the map data from the memory 140, or the sensor data from the sensor device 700 through the input and output resource manager 1010 to the first augmented reality engine Nara and the second augmented reality engine Narb.

As described above, unlike FIG. 18A, by using a single data interface, the first augmented reality engine Nara and the second augmented reality engine Narb may operate together, and only the control authority may be assigned to one of the engines.

That is, the first augmented reality engine Nara may be executed on the first operating system 1140a, the second augmented reality engine Narb may be executed on the second operating system 1140b different from the first operating system 1140a, the data interface may be executed based on the hypervisor 505, the first augmented reality engine Nara may be executed on the first operating system 1140a, and the second augmented reality engine Narb may be executed on the second operating system 1140b.

Accordingly, an augmented reality-based overlay may be stably and rapidly provided under any circumstances.

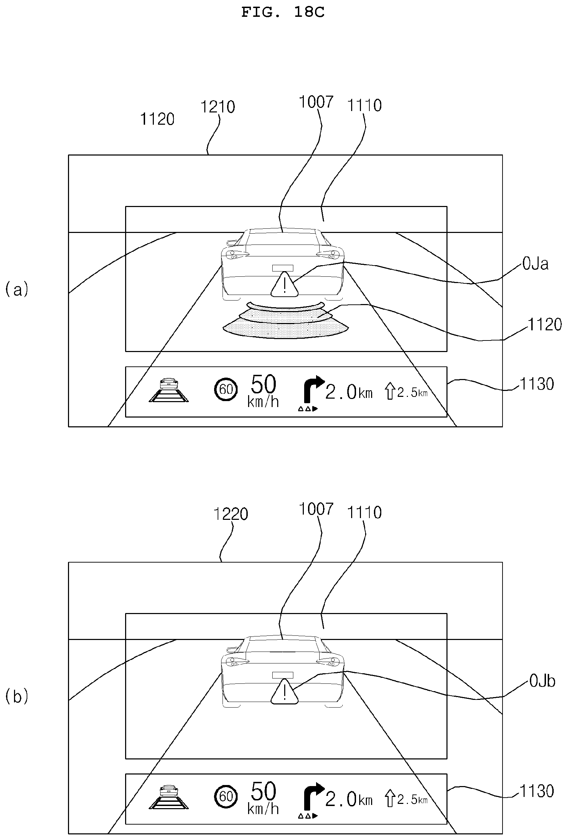

FIG. 18C is a diagram illustrating an example of a first graphical overlay 1210 and a second graphical overlay 1220.

Referring to FIG. 18C, the first augmented reality engine Nara may generate and output the first graphical overlay 1210 having a first layer 1130, which includes vehicle speed information and vehicle heading direction information, and the second layer 1120 which includes a preceding vehicle object and an indicator of a distance to the preceding vehicle, as illustrated in (a) of FIG. 18C.

Meanwhile, the second augmented reality engine Narb may generate and output the second graphical overlay 1220 having the first layer 1130, which includes vehicle speed information and vehicle heading direction information, and a third layer 1110 which includes a preceding vehicle object, as illustrated in (b) of FIG. 18C.

In the second graphical overlay 1220, the indicator of the distance to the preceding vehicle is omitted, and thus includes less data than the first graphical overlay 1210.

That is, the first graphical overlay 1210 may have the first layer 1130 and the second layer 1120, and the second graphical overlay 1220 may have the first layer 1130 and the third layer 1110 including less data than the second layer 1120.

Accordingly, the augmented reality-based overlay may be stably provided even when the first augmented reality engine Nara is stopped.

Meanwhile, the first graphical overlay 1210 of FIG. 18C may be the graphical overlay of FIGS. 11 to 17.

Alternatively, the second graphical overlay 1220 of FIG. 18C may be the graphical overlay of FIGS. 11 to 17.

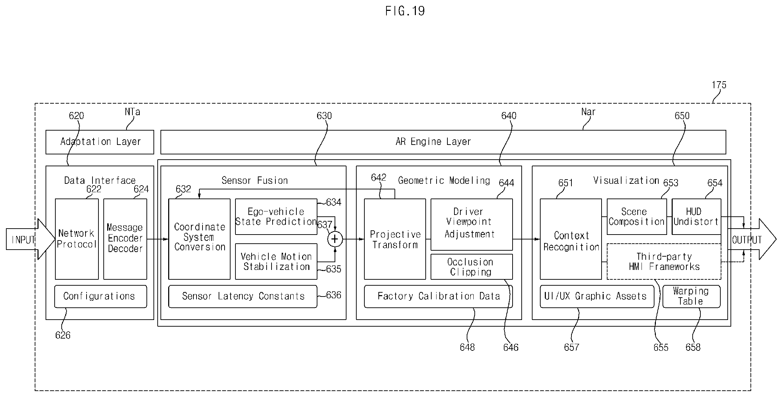

FIG. 19 is an exemplary internal block diagram of the processor of FIGS. 11 to 17.

Referring to FIG. 19, the processor 175 may include a data interface NTa configured to receive camera data from the camera 195, or map data from the memory 140, or sensor data from the sensor device 700, and an augmented reality (AR) engine Nar configured to generate an augmented reality-based overlay based on the image from the camera 195 and to output the generated augmented reality-based overlay.

The AR engine Nar may include the first augmented reality engine Nara and the second augmented reality engine Narb, as illustrated in FIG. 19A.

Meanwhile, the AR engine Nar may execute sensor fusion based on the camera data from the camera 195, or the map data, or the sensor data from the sensor device 700, and may perform geometric modeling based on a result of performing the sensor fusion, and may perform visualization based on a result of the modeling.

To this end, the AR engine Nar in the processor 175 may include a sensor fusion processor 630 configured to perform sensor fusion based on the camera data, the map data, or the sensor data, a geometric modeling processor 640 configured to perform geometric modeling based on a result of performing the sensor fusion, and a visualization processor 650 configured to perform visualization based on a result of the modeling.

A Network Protocol block 622 in the data interface NTa may implement network protocols of various vehicle sensor data transmitted to the AR engine Nar. In this case, the network protocols may be protocols such as SOME/IP, CAN, Ethernet, and the like.

A Message Encoder/Decoder 624 in the data interface NTa may decode encoded binary packets, which are regularly received from the sensor device 700 or a gateway (not shown), and may extract a numeric value which is an original message value.

Meanwhile, a Message Encoder/Decoder 624 in the data interface NTa may add a timestamp of the received time to the decoded data, and may transmit the data, having the timestamp added thereto, to the sensor fusion processor 630.

A Configurations block 626 in the data interface NTa may manage a life cycle of the AR application CAa, may set which window will display AR content, or may manage a window system, an event-driven configuration setting message, or an AR function ON/OFF configuration setting, or may turn on or off AR-based graphical overlays, or may manage a Light/Dark Mode of a graphical user interface, or may change a color tone of an augmented reality lane carpet.

The sensor fusion processor 630 receives decoded, Time-tagged sensor data from the data interface NTa.

A Coordinate System Conversion Block 632 in the sensor fusion processor 630 transforms coordinates of all input sensor messages into a vehicle reference coordinate system by using a transformation matrix.

An Ego-vehicle State Prediction Block 634 in the sensor fusion processor 630 may compensate for latency in each sensor data.

To this end, the Ego-vehicle State Prediction Block 634 in the sensor fusion processor 630 may remove noise from time-series sensor data and perform Kalman filtering and the like.

A Vehicle Motion Stabilization Block 635 in the sensor fusion processor 630 may compensate for vehicle motion caused by uneven surfaces on the road and vehicle suspension.

Meanwhile, a Sensor Latency Constants Block 637 in the sensor fusion processor 630 may transmit center of gravity position offset data from the vehicle reference coordinate system to the Vehicle Motion Stabilization Block.

Meanwhile, result data of the Ego-vehicle State Prediction Block 634 and result data of the Vehicle Motion Stabilization Block 635 may be summed together by an adder 637 to be output to the geometric modeling processor 640.

A projective transform Block 642 in the geometric modeling processor 640 receives the result data from the sensor fusion processor 630 and performs transformation for image projection.

A driver viewpoint adjustment Block 644 in the geometric modeling processor 640 may detect the position of a driver's eyes based on an image from an in-vehicle camera, and may adjust a projection position based on the position of the eyes.

Meanwhile, an occlusion clipping Block 646 in the geometric modeling processor 640 may perform clipping on the projected image.

A factory calibration data Block 646 in the geometric modeling processor 640 may provide calibration data to the projective transform Block 642 or the river viewpoint adjustment Block 644, or the occlusion clipping Block 646.

The visualization processor 650 may receive the result data from the geometric modeling processor 640, and may output various images based on augmented reality.

A context recognition Block 651 in the visualization processor 650 may receive the result data from the geometric modeling processor 640, and may perform context recognition.

A scene composition Block 653 in the visualization processor 650 may perform scene composition based on the data from the context recognition Block 651.

A HUD undistort Block 654 in the visualization processor 650 may receive image data, which is signal-processed data with reduced distortion, from the scene composition Block 653.

A Third-party HMI frameworks Block 655 in the visualization processor 650 may add framework data to the data from the context recognition Block 651, and may output the added data.

A UI/UX graphic assets Block 657 in the visualization processor 650 may provide data for UI/UX of the output image data.

A Warping table Block 659 in the visualization processor 650 may provide Warping table data to units in the visualization processor 650.

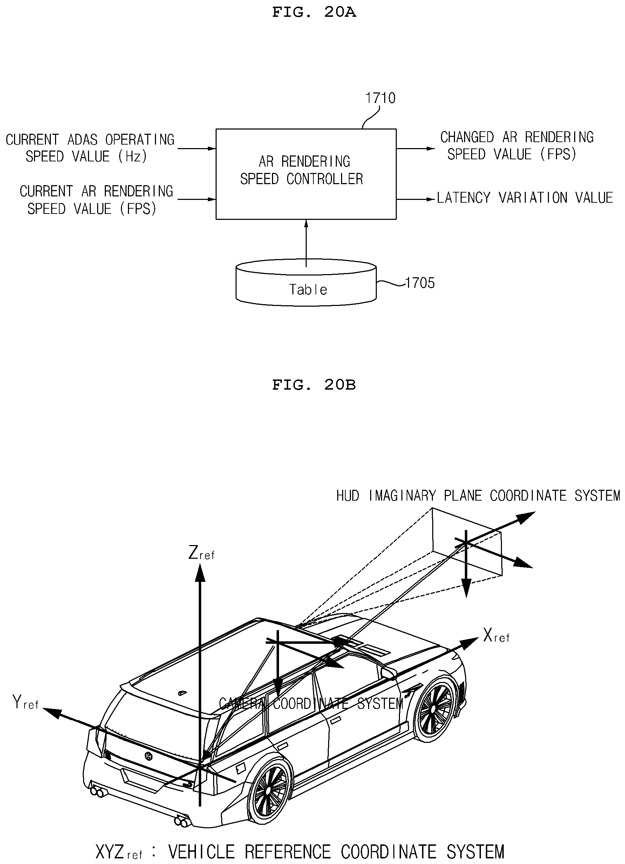

FIGS. 20A to 20G are diagrams referred to in the description of FIG. 19.

FIG. 20A is a diagram illustrating an AR rendering speed controller 1717 and a table 1705.

Referring to FIG. 20A, the AR rendering speed controller 1717 in the processor 175 may operate in the second engine Nar.

The AR rendering speed controller 1717 may change an AR rendering speed based on a current ADAS operating speed of the first engine Nad which is an ADAS engine, and based on a current AR rendering speed associated with the second engine Nar.

Meanwhile, the table 1705 may store data related to the ADAS operating speed or the AR rendering speed.

Meanwhile, the AR rendering speed controller 1717 may output the AR rendering speed value, which is changed based on the current ADAS operating speed of the first engine Nad that is the ADAS engine and the current AR rendering speed associated with the second engine Nar, and a latency variation value. Accordingly, a graphical overlay may be rapidly output while reducing a difference between the ADAS operating speed and the AR rendering speed.

Meanwhile, the ADAS operating speed may be an ADAS frame rate, and the AR rendering speed may also correspond to an AR frame rate.

For example, while a ratio of the AR frame rate to the ADAS frame rate is constant, the AR rendering speed controller 1717 may control a delay or latency to be reduced as the AR frame rate increases.

In another example, while the ADAS frame rate and the AR frame rate are equal, the AR rendering speed controller 1717 may control a delay or latency to be reduced as the AR frame rate increases.

In yet another example, while a ratio of the AR frame rate to the ADAS frame rate is an integer multiple, the AR rendering speed controller 1717 may control a delay or latency to be reduced as the AR frame rate increases.

Meanwhile, the AR rendering speed controller 1717 may control the ADAS frame rate or the AR frame rate to be changed according to a vehicle speed.

For example, if the vehicle speed is a first speed, the AR rendering speed controller 1717 may control the AR frame to be output at a first frame rate, and if the vehicle speed is a second speed higher than the first speed, the AR rendering speed controller 1717 may control the AR frame to be output at a second frame rate higher than the first frame rate. Accordingly, a graphical overlay may be output with reduced delay.

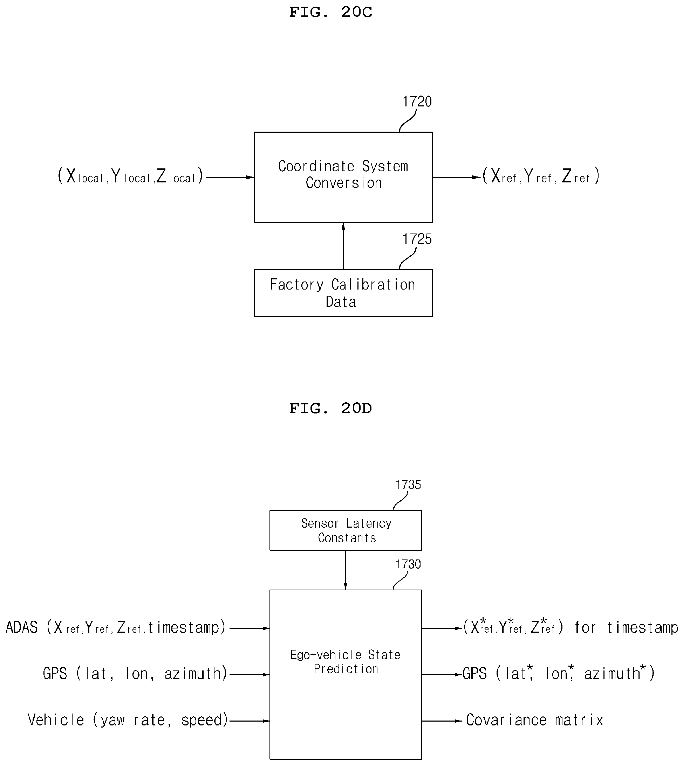

FIGS. 20B and 20C are diagrams referred to in the description of operation of the coordinate System Conversion Block 632.

Referring to FIG. 20B, vehicle sensors each have their own local coordinate system. In this case, the local coordinate system may be a sensor-centric XYZ coordinate system.

Meanwhile, coordinate transformation is required for transforming the sensor-centric coordinate system to a coordinate system centered on the rear axle of a vehicle.

Meanwhile, camera data of the camera 195 may have a camera coordinate system, and a coordinate system of the image projection device 180h may have an imaginary coordinate system.

Accordingly, coordinate transformation is required for matching the camera coordinate system of the camera data and the imaginary coordinate system of the image projection device 180h.

For the coordinate transformation, a matrix operation may be performed as illustrated in FIG. 20C.

That is, Coordinate System Conversion 1720 in the coordinate System Conversion Block 632 may perform coordinate transformation by performing a matrix operation based on a transformation matrix from Factory Calibration Data 1725.

FIG. 20D is a diagram referred to in the description of operation of the Ego-vehicle State Prediction Block 634.

Referring to FIG. 20D, camera data or the sensor data each have their own latency, such that the second engine Nar, which is the AR engine, desirably compensates for the inherent latency time of the camera 195 or the sensor device 700 in order to reduce a delay error.

To this end, Ego-vehicle State Prediction 1730 in the Ego-vehicle State Prediction Block 634 may perform operation using Sensor Latency Constants 1735.

Particularly, the Ego-vehicle State Prediction 1730 may perform Kalman filtering based on ADAS data, GPS data, vehicle direction, speed data, etc., and after performing the filtering, may output data in which noise or latency time is compensated.

That is, the Ego-vehicle State Prediction 1730 may output ADAS data, GPS data, vehicle direction, speed data in which noise or latency time is compensated.

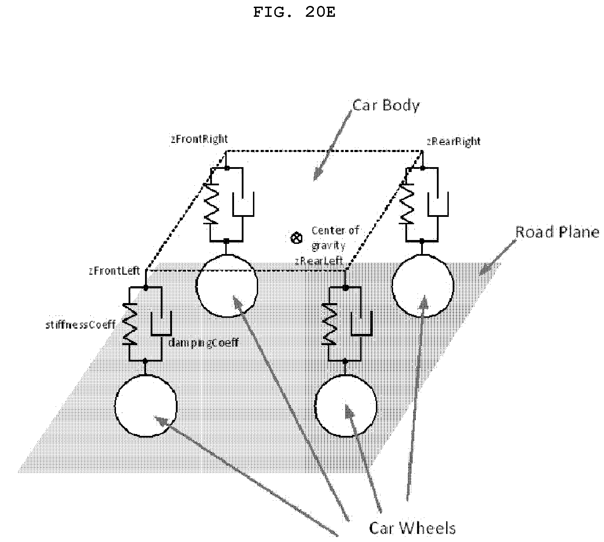

FIGS. 20E to 20G are diagrams referred to in the description of operation of the Vehicle Motion Stabilization block 635.

Referring to FIGS. 20E to 20G, if there are many bumps or uneven surfaces on the road, a vehicle vibrates up and down, such that due to the vehicle motion, a graphical overlay output from the second engine Nar, which is the AR engine, may not be matched with a real image.

Accordingly, as illustrated in FIG. 20E, the Vehicle Motion Stabilization Block 635 performs modeling of vehicle shudder or vibration caused by vehicle suspension (spring) installed on four wheel axles, and predicts the vehicle vibration.

Meanwhile, stiffness and damping coefficient of the suspension on each wheel axle may be set as calibration data.

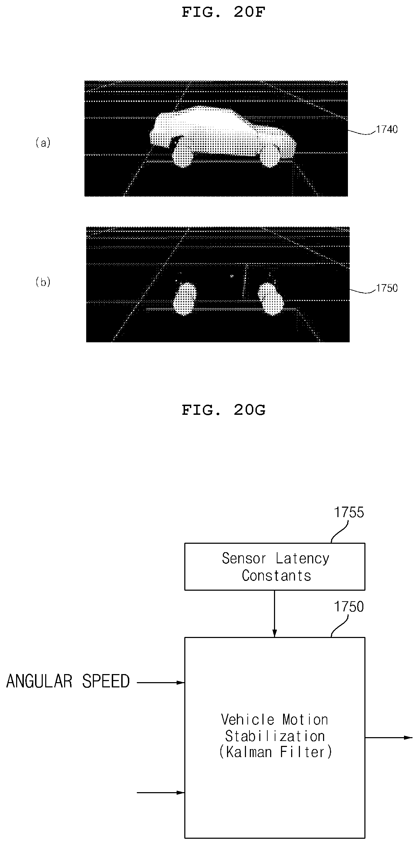

As shown in an image 1740 of (a) of FIG. 20F, the Vehicle Motion Stabilization Block 635 may perform operation based on data of a gyro sensor in the sensor device 700, and may perform compensation as shown in an image 1745 of (b) of FIG. 20F.

That is, as illustrated in FIG. 20G, the Vehicle Motion Stabilization Block 635 includes a Vehicle Motion Stabilization processor 1750, and may perform operation based on the Sensor Latency Constants 1755, angular speed data of the gyro sensor in the sensor device 700, and data transformed by the Coordinate System Conversion Block 632.

Further, the Vehicle Motion Stabilization Block 635 may calculate and output a position of the graphical overlay which is output from the image projection device 180h, etc., and in which a vertical vibration of the vehicle is reflected. Accordingly, the graphical overlay may be output stably with improved visibility.

Meanwhile, various in-vehicle augmented reality apparatuses 1000 illustrated in FIGS. 11 to 17 may project the graphical overlay, generated by the signal processing device 170, onto the windshield by using the image projection device 180h.

Alternatively, various in-vehicle augmented reality apparatuses 1000 illustrated in FIGS. 11 to 17 may project the graphical overlay, generated by the signal processing device 170, onto another display 180a or 180b by using the image projection device 180h.

Meanwhile, an example is illustrated in which various in-vehicle augmented reality apparatuses 1000 illustrated in FIGS. 11 to 17 includes at least one camera 195, the image projection device 180h configured to project forward an image, and the signal processing device 170 including the processor 175 configured to generate a graphical overlay based on camera data from the camera 195, but unlike the example, various modifications may be made.

For example, an in-vehicle augmented reality apparatus 1005 according to another embodiment of the present disclosure may include at least one camera 195, the signal processing device 170 including the processor 175 configured to generate a graphical overlay based on camera data from the camera 195, and an AR glass (not shown) configured to output a graphical overlay output from the signal processing device 170. That is, the in-vehicle augmented reality apparatus 1005 may include the AR glass (not shown) instead of the image projection device 180h.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising:
a memory configured to store map data; and
a processor configured to generate a graphical overlay based on camera data from a camera, the map data, or sensor data from a sensor device,
wherein the processor is configured to :
execute a plurality of virtual machines on an executed hypervisor,
detect an object from the camera data through a first engine executed in one of the plurality of virtual machines,
transmit the detected object to a second engine through a shared memory based on the hypervisor, and
generate a graphical overlay based on the detected object through the second engine executed in some of the plurality of virtual machines and output the generated graphical overlay.

2. The signal processing device of claim 1, wherein the processor is configured to superimpose the graphical overlay on the detected object.

3. The signal processing device of claim 1, wherein a server virtual machine among the plurality of virtual machines is configured to detect the object from the camera data through the first engine, and
wherein a guest virtual machine among the plurality of virtual machines is configured to generate the graphical overlay based on the detected object through the second engine and to output the generated graphical overlay.

4. The signal processing device of claim **3,** wherein a first guest virtual machine among the plurality of virtual machines is configured to operate for a first display, and
wherein a second guest virtual machine among the plurality of virtual machines is configured to generate the graphical overlay based on the detected object through the second engine and to output the generated graphical overlay to an image projection device.

5. The signal processing device of claim **3,** wherein a first guest virtual machine among the plurality of virtual machines is configured to operate for a first display, and
wherein a second guest virtual machine among the plurality of virtual machines is configured to operate for a second display and to generate the graphical overlay based on the detected object through the second engine and output the generated graphical overlay to the second display.

6. The signal processing device of claim 3, wherein the guest virtual machine among the plurality of virtual machines is configured to generate guide information related to vehicle traveling through a third engine based on the sensor data from the sensor device and the map data from the memory,
wherein the second engine is configured to generate the graphical overlay based on the generated guide information related to vehicle traveling and the detected object and output the generated graphical overlay.

7. The signal processing device of claim **3,** wherein the server virtual machine among the plurality of virtual machines is configured to generate guide information related to vehicle traveling through a third engine based on the sensor data from the sensor device and the map data from the memory,
wherein the second engine is configured to generate the graphical overlay based on the generated guide information related to vehicle traveling and the detected object and output the generated graphical overlay.

8. The signal processing device of claim 1, wherein an input and output resource manager executed based on the hypervisor is configured to receive the camera data from the camera or the sensor data from the sensor device and to provide the camera data or the sensor data to the first engine or the second engine.

9. The signal processing device of claim 1, wherein the graphical overlay comprises a first layer including vehicle speed information and vehicle heading direction information, and a second layer including a preceding vehicle object and an indicator of a distance to a preceding vehicle.

10. The signal processing device of claim 1, wherein the processor comprises a data interface configured to receive the camera data from the camera or the sensor data from the sensor device,
wherein the second engine is configured to perform sensor fusion based on the camera data, the map data, or the sensor data, to perform geometric modeling based on a result of performing the sensor fusion, and to perform visualization based on a result of the modeling.

11. The signal processing device of claim 1, wherein the processor comprises:
a data interface configured to receive the camera data from the camera or the sensor data from the sensor device;
a sensor fusion processor configured to perform sensor fusion based on the camera data, the map data, or the sensor data;
a geometric modeling processor configured to perform geometric modeling based on a result of performing the sensor fusion; and
a visualization processor configured to perform visualization based on a result of the modeling.

12. A signal processing device comprising:
a memory configured to store map data; and
a processor configured to generate a graphical overlay based on camera data from a camera, the map data, or sensor data from a sensor device,
wherein the processor is configured to :
execute a plurality of virtual machines on an executed hypervisor,
detect an object from the camera data through a first engine executed in some of the plurality of virtual machines,
generate a graphical overlay based on the detected object through the second engine, and
transmit the generated graphical overlay to another virtual machine among the plurality of virtual machines through a shared memory based on the hypervisor.

13. The signal processing device of claim 12, wherein the processor is configured to superimpose the graphical overlay on the detected object.

14. The signal processing device of claim 1, wherein a server virtual machine among the plurality of virtual machines is configured to detect the object from the camera data through the first engine, and to transmit the graphical overlay, generated through the second engine based on the detected object, to an augmented reality application executed in a guest virtual machine through a shared memory.

15. The signal processing device of claim 14, wherein a first guest virtual machine among the plurality of virtual machines is configured to operate for a first display, and a second guest virtual machine among the plurality of virtual machines is configured to operate for a second display or an image projection device.

16. The signal processing device of claim 1, wherein a server virtual machine among the plurality of virtual machines is configured to transmit the generated graphical overlay to a second guest machine through the shared memory.

17. The signal processing device of claim 15, wherein a server virtual machine among the plurality of virtual machines is configured to transmit the generated graphical overlay to the first guest machine through the shared memory.

18. The signal processing device of claim 14, wherein the server virtual machine among the plurality of virtual machines is configured to generate guide information related to vehicle traveling through a third engine based on the sensor data from the sensor device and the map data from the memory,
wherein the second engine is configured to generate the graphical overlay based on the generated guide information related to vehicle traveling and the detected object and output the generated graphical overlay.

19. The signal processing device of claim 14, wherein an input and output resource manager executed based on the hypervisor is configured to receive the camera data from the camera or the sensor data from the sensor device and to provide the camera data or the sensor data to the first engine or the second engine.

20. An augmented reality apparatus for a vehicle, the apparatus comprising:
at least one camera; and
a signal processing device including a processor configured to generate a graphical overlay based on camera data from the camera,
wherein the signal processing device comprises the signal processing device of any one of claims 1 to 18.

## Amended claims

### Amended claims under Art. 19.1 PCT

1. A signal processing device comprising:
a memory configured to store map data; and
a processor configured to generate a graphical overlay based on camera data from a camera, the map data, or sensor data from a sensor device,
wherein the processor is configured to :
execute a plurality of virtual machines on an executed hypervisor,
detect an object from the camera data through a first engine executed in one of the plurality of virtual machines,
transmit the detected object to a second engine through a shared memory based on the hypervisor,
generate guide information related to vehicle traveling based on the sensor data from the sensor device and the map data from the memory through a third engine executed in one virtual machine among the plurality of virtual machines, and
transmit the generated guide information related to vehicle traveling to the second engine through the shared memory, and
wherein the second engine executed in some of the plurality of virtual machines is configured to generate a graphical overlay based on the generated guide information related to vehicle travel and the detected object through and output the generated graphical overlay.

2. The signal processing device of claim 1, wherein the processor is configured to superimpose the graphical overlay on the detected object.

3. The signal processing device of claim **1,** wherein a server virtual machine among the plurality of virtual machines is configured to detect the object from the camera data through the first engine, and
wherein a guest virtual machine among the plurality of virtual machines is configured to generate the graphical overlay based on the detected object through the second engine and to output the generated graphical overlay.

4. The signal processing device of claim 3, wherein a first guest virtual machine among the plurality of virtual machines is configured to operate for a first display, and
wherein a second guest virtual machine among the plurality of virtual machines is configured to generate the graphical overlay based on the detected object through the second engine and to output the generated graphical overlay to an image projection device.

5. The signal processing device of claim 3, wherein a first guest virtual machine among the plurality of virtual machines is configured to operate for a first display, and
wherein a second guest virtual machine among the plurality of virtual machines is configured to operate for a second display and to generate the graphical overlay based on the detected object through the second engine and output the generated graphical overlay to the second display.

6. The signal processing device of claim 3, wherein the guest virtual machine among the plurality of virtual machines is configured to generate the guide information related to vehicle traveling through the third engine based on the sensor data from the sensor device and the map data from the memory,
wherein the second engine is configured to generate the graphical overlay based on the generated guide information related to vehicle traveling and the detected object and output the generated graphical overlay.

7. The signal processing device of claim 3, wherein the server virtual machine among the plurality of virtual machines is configured to generate guide information related to vehicle traveling through a third engine based on the sensor data from the sensor device and the map data from the memory,
wherein the second engine is configured to generate the graphical overlay based on the generated guide information related to vehicle traveling and the detected object and output the generated graphical overlay.

8. The signal processing device of claim 1, wherein an input and output resource manager executed based on the hypervisor is configured to receive the camera data from the camera or the sensor data from the sensor device and to provide the camera data or the sensor data to the first engine or the second engine.

9. The signal processing device of claim 1, wherein the graphical overlay comprises a first layer including vehicle speed information and vehicle heading direction information, and a second layer including a preceding vehicle object and an indicator of a distance to a preceding vehicle.

10. The signal processing device of claim 1, wherein the processor comprises a data interface configured to receive the camera data from the camera or the sensor data from the sensor device,
wherein the second engine is configured to perform sensor fusion based on the camera data, the map data, or the sensor data, to perform geometric modeling based on a result of performing the sensor fusion, and to perform visualization based on a result of the modeling.

11. The signal processing device of claim 1, wherein the processor comprises:
a data interface configured to receive the camera data from the camera or the sensor data from the sensor device;
a sensor fusion processor configured to perform sensor fusion based on the camera data, the map data, or the sensor data;
a geometric modeling processor configured to perform geometric modeling based on a result of performing the sensor fusion; and
a visualization processor configured to perform visualization based on a result of the modeling.

12. A signal processing device comprising:
a memory configured to store map data; and
a processor configured to generate a graphical overlay based on camera data from a camera, the map data, or sensor data from a sensor device,
wherein the processor is configured to :
execute a plurality of virtual machines on an executed hypervisor,
detect an object from the camera data through a first engine executed in some of the plurality of virtual machines,
generate a graphical overlay based on the detected object through the second engine,
transmit the generated graphical overlay to another virtual machine among the plurality of virtual machines through a shared memory based on the hypervisor,
generate guide information related to vehicle traveling based on the sensor data from the sensor device and the map data from the memory through a third engine executed in one virtual machine among the plurality of virtual machines, and
transmit the generated guide information related to vehicle traveling to another virtual machine among the plurality of virtual machines through the shared memory.

13. The signal processing device of claim 12, wherein the processor is configured to superimpose the graphical overlay on the detected object.

14. The signal processing device of claim 1, wherein a server virtual machine among the plurality of virtual machines is configured to detect the object from the camera data through the first engine, and to transmit the graphical overlay, generated through the second engine based on the detected object, to an augmented reality application executed in a guest virtual machine through a shared memory.

15. The signal processing device of claim 14, wherein a first guest virtual machine among the plurality of virtual machines is configured to operate for a first display, and a second guest virtual machine among the plurality of virtual machines is configured to operate for a second display or an image projection device.

16. The signal processing device of claim 1, wherein a server virtual machine among the plurality of virtual machines is configured to transmit the generated graphical overlay to a second guest machine through the shared memory.

17. The signal processing device of claim 15, wherein a server virtual machine among the plurality of virtual machines is configured to transmit the generated graphical overlay to the first guest machine through the shared memory.

18. The signal processing device of claim 14, wherein the server virtual machine among the plurality of virtual machines is configured to generate the guide information related to vehicle traveling through the third engine based on the sensor data from the sensor device and the map data from the memory,
wherein the second engine is configured to generate the graphical overlay based on the generated guide information related to vehicle traveling and the detected object and output the generated graphical overlay.

19. The signal processing device of claim 14, wherein an input and output resource manager executed based on the hypervisor is configured to receive the camera data from the camera or the sensor data from the sensor device and to provide the camera data or the sensor data to the first engine or the second engine.

20. An augmented reality apparatus for a vehicle, the apparatus comprising:
at least one camera; and
a signal processing device including a processor configured to generate a graphical overlay based on camera data from the camera,
wherein the signal processing device comprises the signal processing device of any one of claims 1 to 19.
